# EUROPÄISCHE PATENTSCHRIFT

(11) **EP 2 945 718 B1**
(45) Veröffentlichungstag und Bekanntmachung des Hinweises auf die Patenterteilung: **15.03.2017**
(21) Anmeldenummer: 14701152.2
(22) Anmeldetag: 09.01.2014
(51) Int. Cl.: B01D 61/36, B01D 9/00

(54) **KRISTALLISATIONSSYSTEM UND -VERFAHREN**
CRYSTALLIZATION SYSTEM AND METHOD
SYSTÈME ET PROCÉDÉ DE CRISTALLISATION

(30) Priorität: 22.01.2013 DE 102013200998
(43) Veröffentlichungstag der Anmeldung: 25.11.2015
(73) Patentinhaber: AAA Water Technologies AG, 6330 Cham (CH)
(72) Erfinder: HEINZL, Wolfang, 83561 Ramerberg (DE)
(74) Vertreter: 2K Patentanwälte Blasberg Kewitz & Reichel
(86) Internationale Anmeldenummer: PCT/EP2014/050268
(87) Internationale Veröffentlichungsnummer: WO 2014/114495

(56) Entgegenhaltungen:
- WO-A1-2005/089914
- WO-A1-2012/062392
- DE-A1-102008 004 237

## Beschreibung

Die vorliegende Erfindung betrifft ein System sowie ein Verfahren zur Kristallisation eines in einem Lösungsmittel gelösten auszukristallisierenden Stoffs, insbesondere Salzes.

Die Kristallisation kann verschiedene Anwendungsbereiche haben, beispielsweise die Rein- und Reinststoffgewinnung unter anderem für die Pharmazie, die fraktionierte Kristallisation zur Ausfällung von zwei oder mehr in einer Lösung vorliegenden Substanzen und die Reduzierung des Volumens einer salzhaltigen Lösung sowie der Gewinnung des/der Salze durch Kristallisation. Für die Rein- und Reinststoffgewinnung ist eine genau definierte Kristallisation anzustreben, bei der die Übersättigung durch die Parameter Volumenstrom, Temperatur und treibendes Potential eingestellt werden kann. Bei der fraktionierten Kristallisation ist eine bezogen auf die Kristallmasse möglichst schnelle Kristallisation vorteilhaft, die auch über die Parameter Volumenstrom, Temperatur und treibendes Potential eingestellt werden kann.

In der Druckschrift WO 2012 / 112 601 A2 ist ein Aufkonzentrationsverfahren mit möglicher Kristallisation beschrieben, wobei eine Konzentrationsdifferenz genutzt wird. Nachteilig an diesem Verfahren ist, dass in die Lösung, aus der auskristallisiert werden soll, ein Plattenapparat getaucht wird, in dem Dampf von einem Brüdenverdichter kommend kondensiert wird. Dieses Vorgehen macht es sehr aufwendig, das Sieden der Lösung gering zu halten oder zu unterbinden. Siedet die Lösung, ist mit unerwünschten "Scaling"-Effekten zu rechnen, durch die eine Verkrustung durch Kristallisation eintritt. Mit aufwendiger Mess- und Regeltechnik muss daher versucht werden, das Sieden der Lösung zu vermeiden. Außerdem sind die für eine definierte Kristallisation notwendige Übersättigung sowie der Grad der Übersättigung nur schwer definiert einstellbar.

Weitere bekannte Kristallisatoren sind Verdampfungskristallisatoren, Umlauf-Kühlungskristallisatoren und Vakuumkristallisatoren.

In Verdampfungskristallisatoren wird die Kristallisation des Salzes durch Abdampfen des Lösungsmittels bewirkt.

Umlauf-Kühlungskristallisatoren verfügen über einen Rohrkristallisator, in den die Lösung eingeführt wird, sowie einen Bandschaber, der die in den Rohrkristallisator eingeführte Lösung an der Rohrwand verstreicht. Dort kühlt die Lösung ab, wobei Kristalle ausfallen, die vom Bandschaber abgekratzt und zu einem Auslass transportiert werden. Der Kristallbrei und die Restlösung werden anschließend zu einer Zentrifuge transportiert und dort getrennt.

Bei der Vakuumkristallisation wird die heiße gesättigte Lösung in einen unter Vakuum stehenden Behälter eingespeist. Ein Teil der Lösung, die unter Vakuum zu sieden beginnt, verdampft. Die Verdampfungsenergie wird aus der Lösung bezogen, was eine Abkühlung der Lösung bewirkt. Dadurch liegt im Kristallisationsbehälter eine durch Aufkonzentrieren und Abkühlen übersättigte Lösung vor.

Da die bekannten Kristallisatoren große Volumina verarbeiten, lassen sich Prozessparameter, wie beispielsweise die Temperatur zur Steuerung des Prozesses, nur langsam anpassen. Eine exakt definierte Kristallisation wird daher erschwert. Auch eine langsame, gezielte Abkühlung, um die verschiedenen Stoffe nacheinander kristallisieren zu lassen, und die gezielte Abtrennung in Fraktionen sind nur schwer möglich.

Aus der Druckschrift WO 2012 / 062 392 A2 ist ein Vorwärtsosmosesystem mit einer Lösungsmittelabtrennung durch Membrandestillation bekannt. Die Druckschrift DE 10 2008 004 237 A1 beschreibt eine Vorrichtung zum Filtern eines Produktstroms. Die Druckschrift WO 2005 / 089 914 A1 offenbart eine Vorrichtung zur Destillation von Lösungen an einer Membran.

Der Erfindung liegt die Aufgabe zugrunde, ein verbessertes System zur Kristallisation eines in einem Lösungsmittel gelösten auszukristallisierenden Stoffs zu schaffen, das bei möglichst einfachem, kompaktem Aufbau eine zuverlässige und energieeffiziente Kristallisation gewährleistet. Das System soll außerdem in vorteilhafter Weise als modulares Strömungssystem ausgestaltet werden. Ferner soll ein entsprechendes Verfahren angegeben werden.

Insbesondere soll das Kristallisationssystem derart ausgestaltet sein, dass sich der Ort der Kristallisation über die Strömungsgeschwindigkeit und die Temperatur der Salzlösung beeinflussen lässt. Ferner soll das Kristallisationssystem ermöglichen, über kleine Volumina die Strömungsgeschwindigkeit und Temperatur schnell zu verändern, Luft/ Gas-Grenzflächen, an denen Kristallisation im Apparat auftreten kann, zu vermeiden, kristallschonend zu arbeiten, die Kristallform und Partikelgröße einstellbar zu gestalten, eine fraktionierte Kristallisation durchzuführen und die Kristalle während eines kontinuierlichen Betriebs abzutrennen.

Die der Erfindung zugrunde liegende Aufgabe wird durch ein System zur Kristallisation eines in einem Lösungsmittel gelösten auszukristallisierenden Stoffs, insbesondere Salzes gelöst, das eine von einer aufzukonzentrierenden Lösung, die das Lösungsmittel mit dem darin gelösten auszukristallisierenden Stoff aufweist, und von einer Flüssigkeit, die eine niedrigere Temperatur als die aufzukonzentrierende Lösung aufweist, durchströmte Kristallisationsvorrichtung aufweist. Die Kristallisationsvorrichtung enthält wenigstens einen die aufzukonzentrierende Lösung führenden Strömungskanal und wenigstens einen die Flüssigkeit führenden Strömungskanal. Der Innenraum eines jeweiligen die aufzukonzentrierende Lösung führenden Strömungskanals ist zumindest teilweise durch eine Membranwand begrenzt, die für den Dampf des Lösungsmittels, nicht jedoch für das flüssige Lösungsmittel durchlässig ist. Ein jeweiliger die Flüssigkeit führender Strömungskanal ist wenigstens einem jeweiligen die aufzukonzentrierende Lösung führenden Strömungskanal zugeordnet und insbesondere dazu benachbart.

Da die aufzukonzentrierende Lösung eine höhere Temperatur und insbesondere einen höheren Dampfdruck als die Flüssigkeit aufweist, ist der Dampfdruck der aufzukonzentrierenden Lösung im Innenraum des jeweiligen Strömungskanals größer als auf der benachbarten Seite der Membranwand. Diese Dampfdruckdifferenz, die sich über die Membranwand hinweg einstellt, bewirkt, dass Lösungsmittel aus der aufzukonzentrierenden Lösung durch die für das dampfförmige Lösungsmittel durchlässige Membranwand hindurch gelangt.

Die aufzukonzentrierende Lösung wird mittels des Strömungskanals entlang der Membranwand bewegt, was zur Folge hat, dass der aufzukonzentrierenden Lösung auf dem Weg durch den Strömungskanal Lösungsmittel entzogen wird. Durch die entlang der Membranwand zunehmende Konzentration des gelösten auszukristallisierenden Stoffs in der aufzukonzentrierenden Lösung beginnen Keimbildung und Kristallisation.

Aufgrund dieser Ausbildung kann das System bei einer relativ großen Kristallisationsleistung relativ einfach und kompakt gehalten werden. Es kann problemlos insbesondere auch eine größere Anzahl von die aufzukonzentrierende Lösung führenden Strömungskanälen und die Flüssigkeit führenden Strömungskanälen vorgesehen sein, wodurch die Effizienz des Systems entsprechend erhöht wird.

Die dampfdurchlässige, flüssigkeitsdichte Membranwand kann die Wandung eines Hohlfadens oder eines Rohrs oder ein flächiges Element sein. Die Kristallisationsvorrichtung kann beispielsweise als Hohlfaden- oder Rohrbündel, Plattenmodul oder Wickelmodul aufgebaut sein. Die Membranwand kann beispielsweise aus mikroporösen, hydrophoben Stoffen, zum Beispiel aus Polytetrafluorethylen, Polypropylen, Polyethylen oder Polyvinylidenfluorid hergestellt sein.

Durch den Einsatz von Strömungskanälen in der Kristallisationsvorrichtung sind kleine Volumina der aufzukonzentrierenden Lösung mit großen Stoff- und Wärmeaustauschflächen in Kontakt. Kleine Volumina haben eine geringe thermische Trägheit und reagieren schnell auf Änderungen der Prozessparameter, wie zum Beispiel der Temperatur.

Zur Kristallisation ist eine Übersättigung der Lösung erforderlich. Die aufzukonzentrierende Lösung kann bereits eine Konzentration des auszukristallisierenden Stoffs an der Sättigung aufweisen, wenn sie in den Prozess eintritt. Durch die Verringerung des Lösungsmittels in der aufzukonzentrierenden Lösung während des Prozesses steigt die Konzentration, Sättigung und Übersättigung werden erreicht und es kommt zur Keimbildung und zu Kristallwachstum. Über die Strömungsgeschwindigkeit und das durch die Dampfdruckdifferenz verursachte treibende Gefälle über die Membranwand hinweg kann der Grad der Übersättigung eingestellt werden und können somit Kristallform und Partikelgröße beeinflusst werden. Ferner lässt sich über die Strömungsgeschwindigkeit und die Temperatur der aufzukonzentrierenden Lösung der Ort der Kristallisation beeinflussen.

Der dem die aufzukonzentrierende Lösung führenden Strömungskanal benachbarte Raum kann zu Beginn des Prozesses flüssigkeits-, teilweise flüssigkeitsgefüllt oder mit Gas gefüllt sein und sich bei Normaldruck oder im Unterdruck befinden.

Es wäre denkbar, dass ein jeweiliger die Flüssigkeit führender Strömungskanal unmittelbar an die Membranwand eines jeweiligen die aufzukonzentrierende Lösung führenden Strömungskanals angrenzt. Da die Flüssigkeit einen niedrigeren Dampfdruck als die aufzukonzentrierende Lösung aufweist, gelangt das Lösungsmittel, das in Dampfform durch die Membranwand tritt, direkt in den die Flüssigkeit führenden Strömungskanal, kondensiert dort und vermischt sich mit der bereits in dem Strömungskanal vorhandenen Flüssigkeit.

Die getrieben durch die Dampfdruckdifferenz über Verdampfung bzw. Verdunstung aus der aufzukonzentrierenden Flüssigkeit frei werdende Wärmemenge wird über die Membranwand als Dampf der Flüssigkeit mit dem niedrigeren Dampfdruck zugeführt. Dies führt zur Abkühlung der aufzukonzentrierenden Lösung und zur Erwärmung der über die Membranwand benachbarten Flüssigkeit durch Kondensation des durch die Membranwand tretenden Dampfs.

Als Alternative zu der vorstehend beschriebenen Ausgestaltung ist erfindungsgemäß zwischen einem jeweiligen die aufzukonzentrierende Lösung führenden Strömungskanal und einem jeweiligen die Flüssigkeit führenden Strömungskanal ein zum Abführen des durch die Membranwand gelangten Lösungsmittels vorgesehener Strömungskanal angeordnet. Der die Flüssigkeit führende Strömungskanal ist von dem zum Abführen des durch die Membranwand gelangten Lösungsmittels vorgesehenen Strömungskanal durch eine Wand getrennt, die insbesondere für das Lösungsmittel dampf- und flüssigkeitsdicht, jedoch wärmeleitend ist.

Bei dieser Ausgestaltung tritt das Lösungsmittel als Dampf durch die Membranwand und kondensiert an der sowohl dampf- als auch flüssigkeitsdichten Wand, die den zusätzlichen Strömungskanal von dem die Flüssigkeit führenden Strömungskanal trennt und die durch die kalte Flüssigkeit auf einer für die Kondensation ausreichend niedrigen Temperatur gehalten wird. Der zusätzliche Strömungskanal erlaubt dann ein einfaches Abführen des durch die Membranwand gelangten und kondensierten Lösungsmittels. Zu Beginn des Prozesses kann der zum Abführen des durch die Membranwand gelangten Lösungsmittels vorgesehene Strömungskanal mit Umgebungsluft gefüllt sein, nach dem Start des Prozesses füllt er sich dann rasch mit dem durch die Membranwand gelangten Lösungsmittel.

Ein weiterer Vorteil des zwischen dem die aufzukonzentrierende Lösung führenden Strömungskanal und dem die Flüssigkeit führenden Strömungskanal angeordneten zusätzlichen Strömungskanals ist, dass das durch die Membranwand hindurchtretende Lösungsmittel nicht die in dem benachbarten Strömungskanal befindliche kalte Flüssigkeit verdünnt.

Bevorzugt durchströmt die Flüssigkeit die Kristallisationsvorrichtung im Gegenstrom zur aufzukonzentrierenden Lösung. Grundsätzlich sind jedoch auch solche Ausführungen denkbar, bei denen die Flüssigkeit die Kristallisationsvorrichtung im Gleichstrom zur aufzukonzentrierenden Lösung durchströmt.

Um größere Volumenströme abarbeiten zu können, umfasst die Kristallisationsvorrichtung vorteilhafterweise mehrere zueinander parallele die aufzukonzentrierende Lösung führende Strömungskanäle sowie mehrere zueinander parallele die Flüssigkeit führende Strömungskanäle. Bei einem gegebenen Volumenstrom kann über die Anzahl der parallel geschalteten Strömungskanäle die Strömungsgeschwindigkeit der aufzukonzentrierenden Lösung eingestellt und damit auch die Kinetik der Kristallisation beeinflusst werden.

Dabei sind vorteilhafterweise wenigstens einem der die Flüssigkeit führenden Strömungskanäle zwei die aufzukonzentrierende Lösung führende Strömungskanäle zugeordnet. Die die aufzukonzentrierende Lösung führenden Strömungskanäle können vorteilhafterweise auf gegenüberliegenden Seiten des jeweiligen die Flüssigkeit führenden Strömungskanals angeordnet sein. Durch diese Maßnahme kann die Anzahl der die Flüssigkeit führenden Strömungskanäle reduziert werden.

Es kann vorgesehen sein, dass die Kristallisationsvorrichtung mehrere hintereinander geschaltete Stufen aufweist, wobei jede Stufe mehrere zueinander parallele die aufzukonzentrierende Lösung führende Strömungskanäle umfasst. Da zudem wenigstens zwei der Stufen eine unterschiedliche Anzahl von die aufzukonzentrierende Lösung führenden Strömungskanälen aufweisen, erhöht sich in der Stufe mit der geringeren Anzahl von Strömungskanälen die Strömungsgeschwindigkeit der aufzukonzentrierenden Lösung und die Kinetik der Kristallisation wird beeinflusst.

Die aufzukonzentrierende Lösung wird erfindungsgemäß entlang der Membranwand bewegt und durch den Dampfdruckunterschied über die Membranwand hinweg erhöht sich mit zunehmender Strecke in dem Strömungskanal die Konzentration des auszukristallisierenden Stoffs. Dies führt zu Keimbildung und zur Kristallisation in dem die aufzukonzentrierende Lösung führenden Strömungskanal. Zwischen der aufzukonzentrierenden Lösung und den Kristallen besteht ein Dichteunterschied, der bewirkt, dass die Kristalle anfangen zu sedimentieren.

Bevorzugt schließt sich unten an einen jeweiligen die aufzukonzentrierende Lösung führenden Strömungskanal ein Sedimentsammelbehälter an, in dem das Sediment, d. h. die erzeugten Kristalle, aufgefangen werden. Der Sedimentsammelbehälter ist vorteilhafterweise mit der aufzukonzentrierenden Lösung gefüllt, wird jedoch nicht von der aufzukonzentrierenden Lösung durchströmt. Am unteren Bereich des Sedimentsammelbehälters kann ein Auslass vorgesehen sein, über den der Sedimentsammelbehälter zum Beispiel sensorüberwacht entleert werden kann.

Kristalle, die am oberen Rand des die aufzukonzentrierende Lösung führenden Strömungskanals entstehen, haben den längsten Sedimentationsweg und die maximale Sedimentationszeit. Nach einer maximalen Zeit, die sich aus der Höhe des Strömungskanals und der Sedimentationsgeschwindigkeit ergibt, erreichen die Kristalle den Sedimentsammelbehälter. Aus Sedimentationszeit und Strömungsgeschwindigkeit lässt sich die für die Sedimentation benötigte maximale Wegstrecke berechnen. Bei fraktionierter Destillation, die zum Beispiel über die Temperatur entlang der Membranwand stattfindet, kann dies für die einzelnen kristallisierenden Stoffe betrachtet werden.

Um die Wärme, die während des Prozesses auf die Flüssigkeit mit dem niedrigeren Dampfdruck übertragen wird, effizient zurückgewinnen zu können, enthält das System bevorzugt einen Wärmetauscher, der die aus der Kristallisationsvorrichtung herausströmende Flüssigkeit abkühlt und mit der daraus gewonnenen Energie die aufzukonzentrierende Lösung aufwärmt.

Zum Erzielen einer guten Wärmerückgewinnung sind kleine Temperaturdifferenzen zwischen den über die Membranwand benachbarten Flüssigkeiten nötig. Da kleine Temperaturdifferenzen allerdings nur einen geringen Potentialunterschied über die Membranwand bewirken, sind für eine ausreichende Wärme- und Stoffübertragung größere Membranflächen erforderlich.

Es kann vorgesehen sein, dass sowohl die die aufzukonzentrierende Lösung führenden Strömungskanäle als auch die die Flüssigkeit führenden Strömungskanäle von der aufzukonzentrierenden Lösung durchströmt werden. Mit anderen Worten wird für die Flüssigkeit mit dem niedrigeren Dampfdruck die aufzukonzentrierende Flüssigkeit verwendet, die allerdings für diesen Zweck eine niedrigere Temperatur aufweisen muss, als in den Strömungskanälen herrscht, in denen die Kristallisation stattfindet.

Die aus einem Ausgang des wenigstens einen die aufzukonzentrierende Lösung führenden Strömungskanals herausströmende Lösung kann bei dieser Ausgestaltung einem Kühlelement zugeführt werden, um nach einer ausreichenden Kühlung einem Eingang des wenigstens einen die Flüssigkeit führenden Strömungskanals zugeführt werden zu können. In entsprechender Weise können einem Ausgang des wenigstens einen die Flüssigkeit führenden Strömungskanals ein Heizelement und ein Eingang des wenigstens einen die aufzukonzentrierende Lösung führenden Strömungskanals nachgeschaltet sein.

Erfindungsgemäß ist die Kristallisationsvorrichtung als modulares Strömungssystem aufgebaut. Die Kristallisationsvorrichtung weist dazu eine Mehrzahl von Rahmenelementen, die zur Bildung unterschiedlicher Funktionseinheiten wie insbesondere des wenigstens einen die aufzukonzentrierende Lösung führenden Strömungskanals und des wenigstens einen die Flüssigkeit führenden Strömungskanals zu wenigstens zwei, insbesondere wenigstens zehn Rahmenelemente umfassenden Stapeln zusammenfassbar sind. Die Rahmenelemente weisen jeweils einen mit Kanälen versehenen äußeren Rahmen, einen vom äußeren Rahmen begrenzten zentralen Innenbereich und einen unterhalb des zentralen Innenbereichs angeordneten Sedimentsammelbereich auf.

Mit den Rahmenelementen kann das System und insbesondere die Kristallisationsvorrichtung auf besonders einfache Weise aufgebaut und in der gewünschten Weise variiert werden. Die Rahmenelemente bzw. die mit den Rahmenelementen aufgebauten Stufen zeichnen sich durch eine relativ einfache Form aus und bieten unterschiedliche Möglichkeiten der Flüssigkeitsführung.

Weiterhin weist die Kristallisationsvorrichtung wenigstens zwei unterschiedliche Typen von Rahmenelementen auf, die abwechselnd zu einem Stapel zusammengefasst sind. Dabei bildet der zentrale Innenbereich des einen Typs von Rahmenelementen einen Teil des wenigstens einen die aufzukonzentrierende Lösung führenden Strömungskanals, und der zentrale Innenbereich des anderen Typs von Rahmenelementen bildet einen Teil des wenigstens einen die Flüssigkeit führenden Strömungskanals.

Auf beiden Seiten des zentralen Innenbereichs eines Typs von Rahmenelementen ist jeweils eine Membranwand angeordnet, insbesondere angeschweißt, die für das dampfförmige Lösungsmittel, nicht jedoch für das flüssige Lösungsmittel durchlässig ist. Der zentrale Innenbereich dieser Rahmenelemente stellt dann einen Teil des wenigstens einen die aufzukonzentrierende Lösung führenden Strömungskanals dar.

Die Rahmenelemente des anderen Typs weisen auf beiden Seiten des zentralen Innenbereichs jeweils eine dampf- und flüssigkeitsdichte Folie auf, die insbesondere angeschweißt sein kann. Der zentrale Innenbereich dieser Rahmenelemente stellt dann einen Teil des wenigstens einen die Flüssigkeit mit dem niedrigen Dampfdruck führenden Strömungskanals dar.

Bei der vorstehenden Ausgestaltung wird durch das Stapeln der Rahmenelemente zwischen jeweils einer Membranwand und einer benachbarten Folie ein Zwischenraum gebildet. Dieser Zwischenraum stellt erfindungsgemäß einen Teil des zum Abführen des durch die Membranwand gelangten Lösungsmittels vorgesehenen Strömungskanals dar.

Die oben beschriebene Aufgabenstellung wird des Weiteren gelöst durch ein Verfahren zur Kristallisation eines in einem Lösungsmittel gelösten auszukristallisierenden Stoffs, wobei eine aufzukonzentrierende Lösung, die das Lösungsmittel mit dem darin gelösten auszukristallisierenden Stoff aufweist, durch wenigstens einen Strömungskanal geführt wird und eine Flüssigkeit, die eine niedrigere Temperatur als die aufzukonzentrierende Lösung aufweist, durch wenigstens einen weiteren Strömungskanal geführt wird. Der Innenraum eines jeweiligen die aufzukonzentrierende Lösung führenden Strömungskanals ist zumindest teilweise durch eine für das dampfförmige Lösungsmittel, nicht jedoch für das flüssige Lösungsmittel durchlässige Membranwand begrenzt. Ferner ist ein jeweiliger die Flüssigkeit führender Strömungskanal zu zumindest einem jeweiligen die aufzukonzentrierende Lösung führenden Strömungskanal benachbart, wodurch sich eine Dampfdruckdifferenz über die Membranwand einstellt, so dass Lösungsmittel aus der aufzukonzentrierenden Lösung durch die Membranwand hindurch gelangt.

Die Erfindung wird nachfolgend anhand von Ausführungsbeispielen unter Bezug auf die Zeichnungen näher erläutert. In diesen zeigen:
- Figur 1: eine schematische Darstellung einer beispielhaften Ausführungsform eines Systems zur Kristallisation eines in einem Lösungsmittel gelösten auszukristallisierenden Stoffs mit einer Kristallisationsvorrichtung, die einen die aufzukonzentrierende Lösung führenden Strömungskanal und einen die Flüssigkeit führenden Strömungskanal aufweist;
- Figur 2: eine perspektivische, schematische Darstellung des Systems aus Figur 1;
- Figur 3: eine schematische Darstellung einer beispielhaften Ausführungsform eines Kristallisationssystems mit einer Mehrzahl von parallel geschalteten die aufzukonzentrierende Lösung führenden Strömungskanälen und einer Mehrzahl von parallel geschalteten die Flüssigkeit führenden Strömungskanälen;
- Figur 4: eine schematische Darstellung einer beispielhaften Ausführungsform eines Kristallisationssystems mit zwei hintereinander geschalteten Stufen mit jeweils mehreren parallel geschalteten die aufzukonzentrierende Lösung führende Strömungskanälen;
- Figur 5: eine schematische Darstellung einer beispielhaften Ausführungsform eines Kristallisationssystems mit mehreren hintereinander geschalteten Stufen, die teilweise eine unterschiedliche Anzahl von parallel geschalteten die aufzukonzentrierende Lösung führenden Strömungskanälen aufweisen;
- Figur 6: eine schematische Darstellung einer beispielhaften Ausführungsform eines Kristallisationssystems mit einem zwischen einem die aufzukonzentrierende Lösung führenden Strömungskanal und einem die Flüssigkeit führenden Strömungskanal zum Abführen des durch die Membranwand gelangten Lösungsmittels vorgesehenen Strömungskanal;
- Figur 7: eine schematische Darstellung einer beispielhaften Ausführungsform eines Kristallisationssystems mit zwei hintereinander geschalteten Stufen mit jeweiligen zum Abführen des durch die Membranwand gelangten Lösungsmittels vorgesehenen Strömungskanälen;
- Figur 8: eine schematische Darstellung einer beispielhaften Ausführungsform eines Kristallisationssystems mit Wärmetauschern;
- Figur 9: eine schematische Darstellung einer weiteren beispielhaften Ausführungsform eines Kristallisationssystems mit Wärmetauschern;
- Figur 10: eine schematische Darstellung einer beispielhaften Ausführungsform eines ersten Typs von Rahmenelementen;
- Figur 11: eine schematische Darstellung einer beispielhaften Ausführungsform eines zweiten Typs von Rahmenelementen;
- Figur 12: eine schematische Darstellung einer weiteren beispielhaften Ausführungsform eines ersten Typs von Rahmenelementen;
- Figur 13: eine schematische Darstellung einer weiteren beispielhaften Ausführungsform eines zweiten Typs von Rahmenelementen; und
- Figur 14: eine schematische Darstellung einer beispielhaften Ausführurigsform eines Kristallisationssystems mit Wärmetauschern in Form von Rahmenelementen.

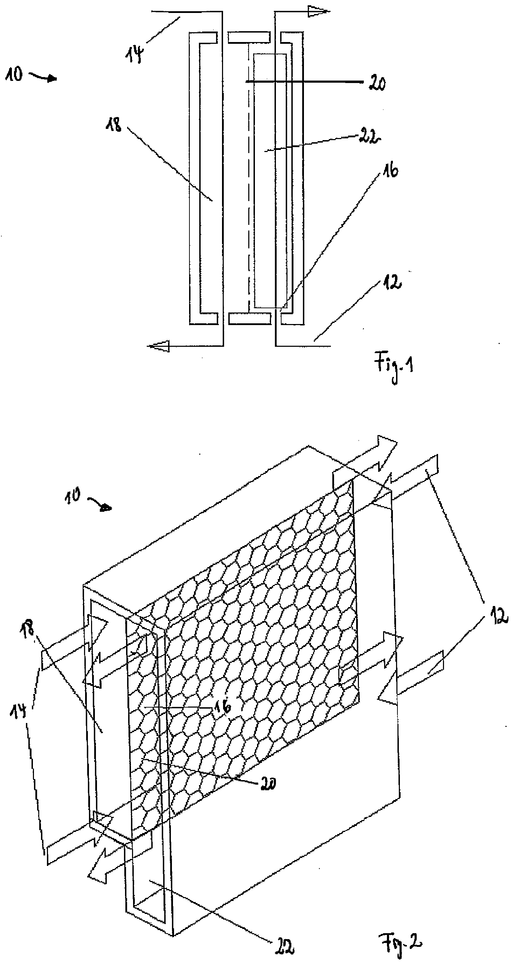

Figur 1 zeigt in schematischer Darstellung eine beispielhafte Ausführungsform eines Systems zur Kristallisation eines in einem Lösungsmittel gelösten auszukristallisierenden Stoffs. Dabei kann es sich bei dem Lösungsmittel beispielsweise um Wasser und bei dem darin gelösten Stoff beispielsweise um ein Salz handeln.

Während Figur 1 das System in Draufsicht zeigt, ist das System in Figur 2 schematisch in einer perspektivischen Darstellung gezeigt.

Das in den Figuren 1 und 2 dargestellte System weist eine Kristallisationsvorrichtung 10 auf, die von einer aufzukonzentrierenden Lösung 12 und von einer Flüssigkeit 14, die eine niedrigere Temperatur als die aufzukonzentrierende Lösung 12 aufweist, durchströmt ist. Die aufzukonzentrierende Lösung 12 enthält das Lösungsmittel mit dem darin gelösten auszukristallisierenden Stoff. Die Kristallisationsvorrichtung 10 umfasst einen die aufzukonzentrierende Lösung führenden Strömungskanal 16 und einen die Flüssigkeit 14 führenden Strömungskanal 18. Der Innenraum des die aufzukonzentrierende Lösung 12 führenden Strömungskanals 16 ist zumindest teilweise durch eine für das dampfförmige Lösungsmittel, nicht jedoch für das flüssige Lösungsmittel durchlässige Membranwand 20 begrenzt.

Der die Flüssigkeit 14 führende Strömungskanal 18 ist zu dem die aufzukonzentrierende Lösung 12 führenden Strömungskanal 16 benachbart. In der in den Figuren 1 und 2 gezeigten Ausführungsform grenzt der die Flüssigkeit 14 führende Strömungskanal 18 zudem unmittelbar an die Membranwand 20 des die aufzukonzentrierende Lösung 12 führenden Strömungskanals 16 an. Ferner durchströmt die Flüssigkeit 14 die Kristallisationsvorrichtung 10 im Gegenstrom zur aufzukonzentrierenden Lösung 12.

Die Flüssigkeit 14 weist aufgrund ihrer niedrigeren Temperatur einen niedrigeren Dampfdruck als die aufzukonzentrierende Lösung 12 auf. Folglich ist der Dampfdruck im Innenraum des die aufzukonzentrierende Lösung 12 führenden Strömungskanals 16 größer als auf der benachbarten Seite der Membranwand 20, d. h. im Innenraum des die Flüssigkeit 14 führenden Strömungskanals 18. Diese Dampfdruckdifferenz über die Membranwand 20 bewirkt, dass Lösungsmittel aus der aufzukonzentrierenden Lösung 12 in Dampfform durch die Membranwand 20 hindurch gelangt. Auf ihrem Weg durch den Strömungskanal 16 wird der aufzukonzentrierenden Lösung 12 daher Lösungsmittel entzogen, welches der Flüssigkeit 14 zugeführt wird. Durch die entlang des Strömungskanals 16 zunehmende Konzentration des gelösten auszukristallisierenden Stoffs in der aufzukonzentrierenden Lösung 12 beginnen Keimbildung und Kristallisation.

Der Strömungskanal 16 für die aufzukonzentrierende Lösung 12 weist an seiner Unterseite zumindest teilweise eine Öffnung auf, an diese sich ein Sedimentsammelbehälter 22 anschließt. Die bei der Kristallisation entstehenden Kristalle können in den Sedimentsammelbehälter 22 hinein sedimentieren. Der Strömungskanal 18 für die den Potentialunterschied erzeugende Flüssigkeit 14 ist nach unten geschlossen. Der Sedimentsammelbehälter 22 ist mit der aufzukonzentrierenden Lösung 12 gefüllt, wird jedoch nicht von der aufzukonzentrierenden Lösung 12 durchströmt.

Die Membranwand 20 kann beispielsweise aus mikroporösen, hydrophoben Stoffen, zum Beispiel aus Polytetrafluorethylen, Polypropylen, Polyethylen oder Polyvinylidenfluorid hergestellt sein.

Die Strömung der aufzukonzentrierenden Lösung 12 und der Flüssigkeit 14 durch den jeweiligen Strömungskanal 16 bzw. 18 kann beispielsweise mit in den Figuren 1 und 2 nicht dargestellten Pumpen erzeugt werden. Über die Pumpen kann die jeweilige Strömungsgeschwindigkeit eingestellt werden.

Die aufzukonzentrierende Lösung 12 kann bereits beim Eintritt in den Strömungskanal 16 eine Konzentration des auszukristallisierenden Stoffs nahe der Sättigung aufweisen. Durch die Verringerung des Lösungsmittels in der aufzukonzentrierenden Lösung 12 steigt die Konzentration des auszukristallisierenden Stoffs entlang des Strömungskanals 16, wodurch letztlich Sättigung und Übersättigung erreicht werden und es zu Keimbildung und Kristallwachstum kommt. Über die Strömungsgeschwindigkeit und das durch die Dampfdruckdifferenz verursachte treibende Gefälle über die Membranwand 20 hinweg kann der Grad der Übersättigung eingestellt werden und können somit Form und Partikelgröße der erzeugten Kristalle beeinflusst werden.

Bei thermischen Verfahren ist ein geringer thermischer Energiebedarf anzustreben. Dies wird bei der in den Figuren 1 und 2 gezeigten Kristallisationsvorrichtung 10 erreicht, indem die aufzukonzentrierende Lösung 12 und die Flüssigkeit 14 mit dem geringeren Dampfdruck im Gegenstrom an der Membranwand 20 vorbeigeführt werden. Hierbei ist es hilfreich, gleiche Wärmekapazitätsströme durch die Strömungskanäle 16 und 18 zu führen. Die über Verdunstung/ Verdampfung aus der aufzukonzentrierenden Lösung 12 aufgrund des Dampfdruckunterschieds frei werdende Wärmemenge wird über die Membranwand 20 als Dampf der Flüssigkeit 14 zugeführt. Dies führt zur Abkühlung der aufzukonzentrierenden Lösung 12 und zur Erwärmung der Flüssigkeit 14 durch Kondensation des durch die Membranwand 20 tretenden Lösungsmitteldampfs.

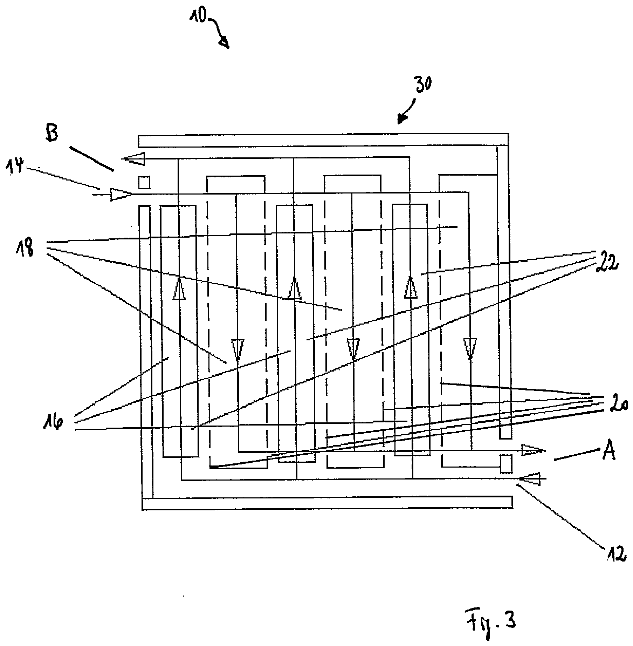

Figur 3 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10, die aus einer Stufe 30 besteht. Die Stufe 30 umfasst mehrere zueinander parallele die aufzukonzentrierende Lösung 12 führende Strömungskanäle 16 sowie mehrere zueinander parallele die Flüssigkeit 14 führende Strömungskanäle 18. In der Ausführungsform nach Figur 3 umfasst die Stufe 30 drei Strömungskanäle 16 und drei Strömungskanäle 18, es kann aber auch eine andere Anzahl von Strömungskanälen 16 bzw. 18 vorgesehen sein.

Die Strömungskanäle 16 und 18 sind in der Stufe 30 abwechselnd nebeneinander angeordnet. Zwischen benachbarten Strömungskanälen 16 und 18 ist jeweils eine für das dampfförmige Lösungsmittel, nicht jedoch für das flüssige Lösungsmittel durchlässige Membranwand 20 angeordnet, die die jeweiligen Strömungskanäle 16 und 18 voneinander trennt. Die durch eine jeweilige Membranwand 20 getrennten Strömungskanäle 16 und 18 grenzen unmittelbar an jeweils gegenüberliegende Seiten der Membranwand 20 an. Wie Figur 3 zeigt, bedingt diese Anordnung in der Stufe 30, dass zwei der die Flüssigkeit 14 führenden Strömungskanäle 18 direkt benachbart zu zwei die aufzukonzentrierende Lösung 12 führenden Strömungskanälen 16 sind.

Die aufzukonzentrierende Lösung 12 wird am Punkt A in die Stufe 30 eingespeist, anschließend durchströmt die aufzukonzentrierende Lösung 12 die drei Strömungskanäle 16, wobei Lösungsmittel aufgrund des niedrigeren Dampfdrucks der Flüssigkeit 14 durch die Membranwände 20 in die benachbarten Strömungskanäle 18 gelangt und dort in die Flüssigkeit 14 kondensiert. Die Konzentration des auszukristallisierenden Stoffs in der aufzukonzentrierenden Lösung 12 wird dadurch entlang der Strömungskanäle 16 erhöht. Außerdem kühlt die aufzukonzentrierende Lösung 12 bei diesem Prozess ab. Schließlich wird die Lösung 12 am Punkt B aus der Stufe 30 herausgeführt.

Am Punkt B wird ferner die Flüssigkeit 14 mit dem niedrigeren Dampfdruck der Stufe 30 zugeführt und anschließend auf die drei parallelen Strömungskanäle 18 verteilt. Bei dem in der Stufe 30 stattfindenden Prozess wird die Flüssigkeit durch die Kondensation des Lösungsmittels erwärmt. Die erwärmte Flüssigkeit 14 verlässt die Stufe 30 am Punkt A. Die Flüssigkeit 14 durchströmt die Stufe 30 im Gegenstrom zur aufzukonzentrierenden Lösung 12.

Die Strömungskanäle 16 für die aufzukonzentrierende Lösung 12 sind jeweils nach unten in einen Sedimentsammelraum 22 hinein zumindest teilweise geöffnet. In die Sedimentsammelräume 22 hinein sedimentieren die in dem Prozess entstehenden Kristalle. Die Strömungskanäle 18 für die den Potentialunterschied erzeugende Flüssigkeit 14 sind demgegenüber nach unten geschlossen.

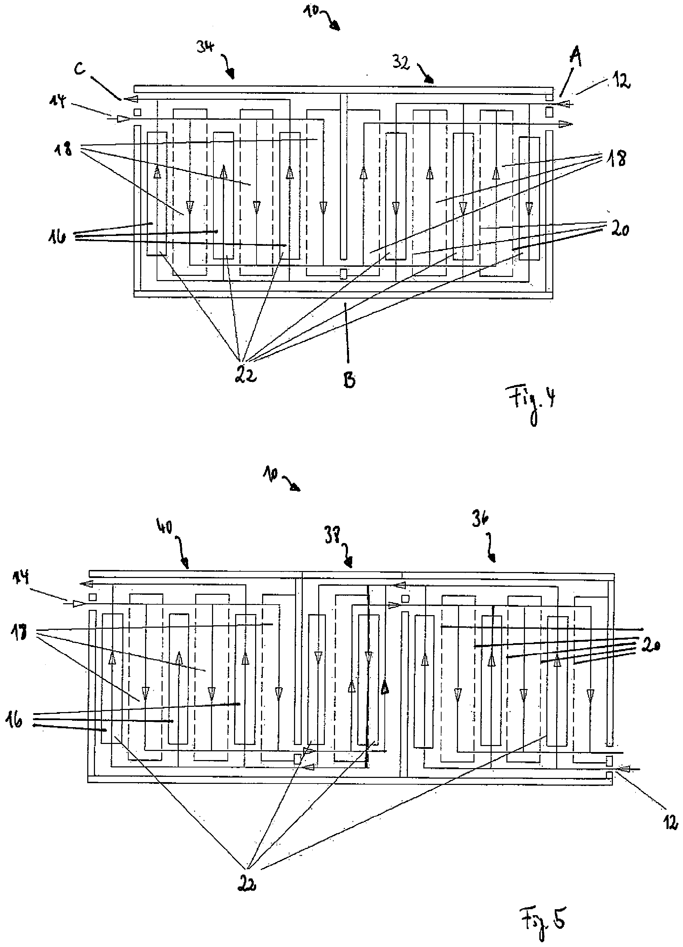

Figur 4 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10, die aus zwei hintereinander geschalteten Stufen 32 und 34 bestehen. Die beiden Stufen 32 und 34 sind spiegelbildlich aufgebaut.

Ferner sind die beiden Stufen 32 und 34 ähnlich wie die in Figur 3 dargestellte Stufe 30 aufgebaut. Beide Stufen 32 und 34 enthalten jeweils mehrere zueinander parallele die aufzukonzentrierende Lösung 12 führende Strömungskanäle 16 sowie mehrere zueinander parallele die Flüssigkeit 14 führende Strömungskanäle 18. Zwei jeweils direkt nebeneinander liegende Strömungskanäle 16 und 18 sind durch eine Membranwand 20 getrennt, die für das in der aufzukonzentrierenden Lösung 12 enthaltene Lösungsmittel in Dampfform, jedoch nicht in flüssiger Form durchlässig ist.

Die aufzukonzentrierende Lösung 12 wird am Punkt A in die Stufe 32 eingespeist, geht am Punkt B in die nachgeschaltete Stufe 34 über und verlässt die Stufe 34 am Punkt C. Die Flüssigkeit 14 mit dem niedrigeren Dampfdruck wird am Punkt C in die Stufe 34 eingespeist, tritt am Punkt B in die Stufe 32 ein und verlässt die Stufe 32 am Punkt A.

Durch das Hintereinanderschalten der Stufen 32 und 34 addieren sich die Strömungskanäle 16 in der Länge und die für die Sedimentation benötigten Strömungslängen können auf einfache Weise erreicht werden.

Figur 5 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10, die aus drei hintereinander geschalteten Stufen 36, 38 und 40 besteht.

Die Stufen 36 und 40 sind ähnlich wie die Stufe 34 gemäß Figur 4 aufgebaut, d. h., die Stufen 36 und 40 weisen jeweils drei zueinander parallele die aufzukonzentrierende Lösung 12 führende Strömungskanäle 16 sowie drei zueinander parallele die Flüssigkeit 14 führende Strömungskanäle 18 auf, wobei zwischen zwei direkt nebeneinander liegenden Strömungskanälen 16 und 18 jeweils eine Membranwand 20 angeordnet ist.

Die Stufe 38 ist ähnlich wie die Stufe 32 gemäß Figur 4 aufgebaut, enthält jedoch nur zwei zueinander parallele die aufzukonzentrierende Lösung 12 führende Strömungskanäle 16 und zwei zueinander parallele die Flüssigkeit 14 führende Strömungskanäle 18 mit den jeweils dazwischen angeordneten Membranwänden 20.

Sofern das Volumen der die Stufen 36, 38 und 40 pro Zeiteinheit durchströmenden aufzukonzentrierenden Lösung 12 für jede der Stufen 36, 38 und 40 annähernd gleich ist, erhöht sich in der Stufe 38 mit der geringeren Anzahl von Strömungskanälen 16 die Strömungsgeschwindigkeit der aufzukonzentrierenden Lösung 12 und die Kinetik der Kristallisation wird beeinflusst.

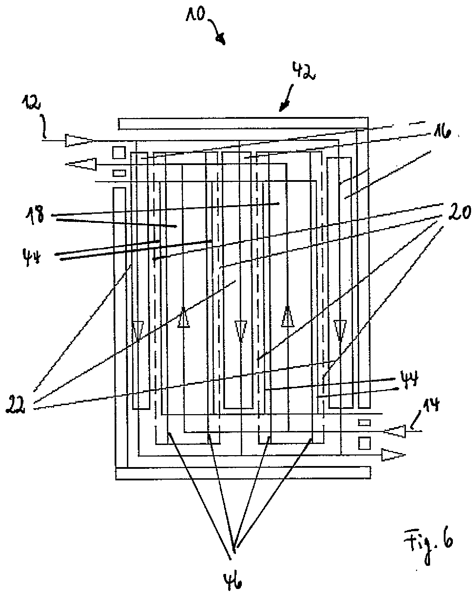

Figur 6 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10. Die Kristallisationsvorrichtung 10 umfasst eine Stufe 42, die beispielhaft drei parallel angeordnete die aufzukonzentrierende Lösung 12 führende Strömungskanäle 16 und zwei parallel angeordnete die Flüssigkeit 14 führende Strömungskanäle 18 aufweist. Der Innenraum eines jeweiligen die aufzukonzentrierende Lösung 12 führenden Strömungskanals 16 ist zumindest teilweise durch eine für das dampfförmige Lösungsmittel, nicht jedoch für das flüssige Lösungsmittel durchlässige Membranwand 20 begrenzt.

In der Ausführungsform gemäß Figur 6 grenzt ein jeweiliger die Flüssigkeit 14 führender Strömungskanal 18 nicht unmittelbar an die Membranwand 20 des benachbarten die aufzukonzentrierende Lösung 12 führenden Strömungskanals 16 an, sondern zwischen einem jeweiligen die aufzukonzentrierende Lösung 12 führenden Strömungskanal 16 und einem jeweiligen die Flüssigkeit 14 führenden Strömungskanal 18 ist ein zum Abführen des durch die Membranwand 20 gelangten Lösungsmittels vorgesehener Strömungskanal 44 angeordnet. Ferner sind die die Flüssigkeit 14 führenden Strömungskanäle 18 von dem jeweiligen zum Abführen des durch die Membranwand 20 gelangten Lösungsmittels vorgesehenen Strömungskanal 44 durch eine dampf- und flüssigkeitsdichte Wand 46 getrennt.

Da die dampf- und flüssigkeitsdichte Wand 46 wärmeleitend ist, kühlt die Flüssigkeit 12 über die Wand 46 den im Strömungskanal 44 befindlichen Stoff und erzeugt dort einen Dampfdruck, der niedriger ist als in dem die aufzukonzentrierende Lösung 12 führenden Strömungskanal 16, woraus sich eine Dampfdruckdifferenz über die jeweilige Membranwand 20 ergibt. Getrieben von dieser Dampfdruckdifferenz tritt das Lösungsmittel als Dampf aus der aufzukonzentrierenden Lösung 12 durch die Membranwand 20 und kondensiert an der für das Lösungsmittel sowohl dampf- als auch flüssigkeitsdichten Wand 46, die den Strömungskanal 44 von dem die Flüssigkeit 14 führenden Strömungskanal 18 trennt. Der Strömungskanal 44 erlaubt ein einfaches Abführen des durch die Membranwand 20 gelangten und kondensierten Lösungsmittels.

Zu Beginn des Prozesses kann der zum Abführen des durch die Membranwand 20 gelangten Lösungsmittels vorgesehene Strömungskanal 44 mit Umgebungsluft gefüllt sein, nach dem Start des Prozesses füllt er sich jedoch rasch mit dem Lösungsmittel. Durch den zwischen einem jeweiligen die aufzukonzentrierende Lösung 12 führenden Strömungskanal 16 und einem jeweiligen die Flüssigkeit 14 führenden Strömungskanal 18 angeordneten Strömungskanal 44 wird verhindert, dass das durch die Membranwand 20 hindurchtretende Lösungsmittel die in dem benachbarten Strömungskanal 18 befindliche Flüssigkeit 14 verdünnt.

In der in Figur 6 gezeigten Ausführungsform ist auf beiden Seiten jedes der die Flüssigkeit 14 führenden Strömungskanäle 18 eine dampf- und flüssigkeitsdichte Wand 46 angeordnet. An die Wand 46 schließt sich jeweils unmittelbar ein Strömungskanal 44 zum Abführen des Lösungsmittels an. Auf seiner gegenüberliegenden Seite grenzt jeder der Strömungskanäle 44 unmittelbar an eine Membranwand 20, die den jeweiligen Strömungskanal 44 von dem benachbarten, auf der anderen Seite der Membranwand 20 befindlichen Strömungskanal 16 für die aufzukonzentrierende Lösung 12 trennt.

Die Flüssigkeit 14 durchströmt die Kristallisationsvorrichtung 10 im Gegenstrom zur aufzukonzentrierenden Lösung 12. Ferner sind die Strömungskanäle 16 für die aufzukonzentrierende Lösung 12 jeweils nach unten in einen Sedimentsammelraum 22 hinein zumindest teilweise geöffnet. In die Sedimentsammelräume 22 hinein sedimentieren die in dem Prozess entstehenden Kristalle. Die Strömungskanäle 18 für die den Potentialunterschied erzeugende Flüssigkeit 14 sind demgegenüber nach unten geschlossen.

Sofern die Membranwand 20 mikroporös ist und es zu einer Kristallisation an der Membranwand 20 kommt, so kann dies zu einem Durchwachsen der Kristalle durch die Membranwand 20 führen. Als Folge kann die aufzukonzentrierende Lösung 12 über die durch die Membranwand 20 hindurchgewachsenen Kristalle vom Strömungskanal 16 in den Strömungskanal 18 gelangen. In diesem Fall kann der Relativdruck zwischen den Strömungskanälen 16 und 18 so eingestellt werden, dass die Drücke in den Strömungskanälen 16 und 18 gleich sind oder der Druck im Strömungskanal 18 höher ist als im Strömungskanal 16. So kann eine Rückspülung der Pore bewirkt werden, durch die Kristallwachstum stattgefunden hat. Die Druckdifferenz zwischen den Strömungskanälen 16 und 18 kann auch periodisch aufgebaut werden.

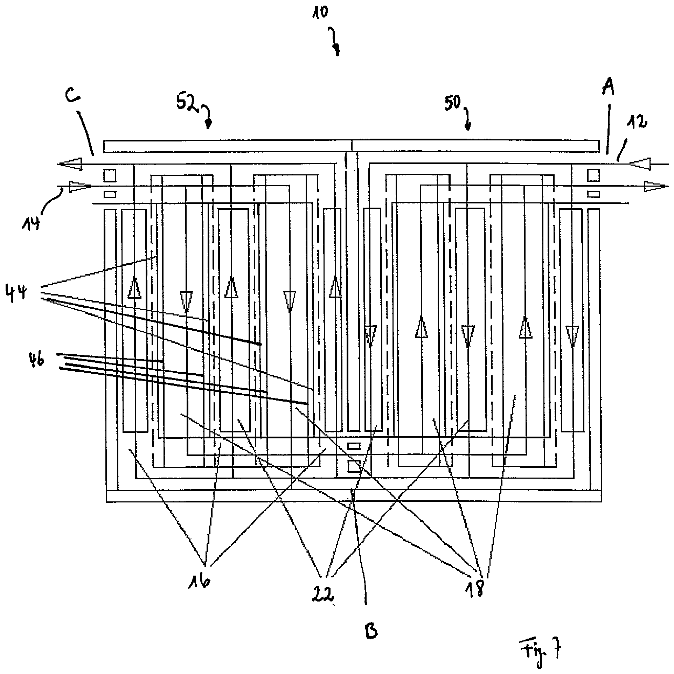

Figur 7 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10, die aus zwei hintereinander geschalteten Stufen 50 und 52 bestehen. Die Stufen 50 und 52 entsprechen in ihrem Aufbau der in Figur 6 dargestellten Stufe 42. Insbesondere weisen die beiden Stufen 50 und 52 Strömungskanäle 44 auf, die zwischen einem jeweiligen die aufzukonzentrierende Lösung 12 führenden Strömungskanal 16 und einem jeweiligen die Flüssigkeit 14 führenden Strömungskanal 18 angeordnet und zum Abführen des durch die Membranwand 20 gelangten Lösungsmittels vorgesehen sind. Ferner sind die Stufen 50 und 52 zueinander spiegelbildlich aufgebaut.

Die aufzukonzentrierende Lösung 12 wird am Punkt A in die Stufe 50 eingespeist, geht am Punkt B in die nachgeschaltete Stufe 52 über und verlässt die Stufe 52 am Punkt C. Die kalte Flüssigkeit 14 wird am Punkt C in die Stufe 52 eingespeist, tritt am Punkt B in die Stufe 50 ein und verlässt die Stufe 50 am Punkt A. Ferner sind an den Punkten A und C Auslässe für das von den Strömungskanälen 44 abgeführte Lösungsmittel vorgesehen.

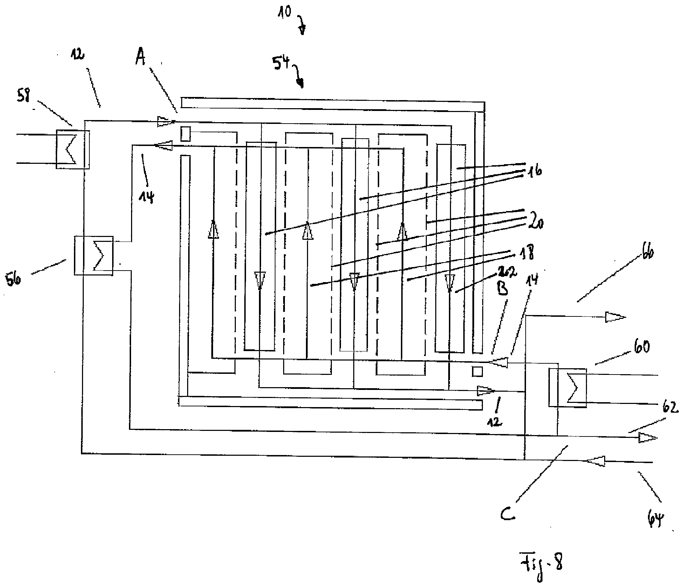

Figur 8 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10. Die Kristallisationsvorrichtung 10 umfasst eine Stufe 54, die den gleichen Aufbau aufweist wie die in Figur 3 gezeigte Stufe 30, wobei die Stufe 54 allerdings in umgekehrter Richtung wie die Stufe 30 durchströmt wird. Außerdem umfasst das in Figur 8 dargestellte System Wärmetauscher 56, 58 und 60 zur Energierückgewinnung.

Die aufzukonzentrierende Lösung 12 tritt in Figur 8 am Punkt A erhitzt in die Kristallisationsvorrichtung 10 ein und durchströmt die Kristallisationsvorrichtung 10 im Gegenstrom zur kälteren Flüssigkeit 14. Die abgekühlte Flüssigkeit 14 tritt am Punkt B in die Kristallisationsvorrichtung 10 ein. Durch Wärmeleitung über die Membranwand 20 und Verdampfung des Lösungsmittels aus der aufzukonzentrierenden Lösung 12 kühlt sich die aufzukonzentrierende Lösung 12 ab. Im gleichen Verhältnis wird über Wärmeleitung und Kondensation des Lösungsmittels die Flüssigkeit 14 aufgewärmt. Die abgekühlte aufzukonzentrierende Lösung 12 verlässt am Punkt B die Kristallisationsvorrichtung 10. Die aufgewärmte Flüssigkeit 14 verlässt am Punkt A die Kristallisationsvorrichtung 10.

Im Wärmetauscher 56 wird die aus der Kristallisationsvorrichtung 10 ausgetretene, aufgewärmte Flüssigkeit 14 abgekühlt und die aus der Kristallisationsvorrichtung 10 ausgetretene, aufzukonzentrierende Lösung 12 aufgewärmt. Im Wärmetauscher 58 wird die aus dem Wärmetauscher 56 kommende aufzukonzentrierende Lösung 12 weiter erwärmt, bis sie wärmer als die am Punkt A aus der Kristallisationsvorrichtung 10 austretende Flüssigkeit 14 ist. Im Wärmetauscher 60 wird die aus dem Wärmetauscher 56 kommende Flüssigkeit 14 so weit abgekühlt, bis sie kälter als die aufzukonzentrierende Lösung 12 am Punkt B ist, d. h., bis ein ausreichender Potentialunterschied für den Stoffübergang aus der aufzukonzentrierenden Lösung 12 in die Flüssigkeit 14 erreicht ist. Die Wärmetauscher 58 und 60 können allgemein als Heiz- bzw. Kühlelement ausgeführt sein.

Der Volumenstrom der Flüssigkeit 14 wird durch Stoffübergang aus der aufzukonzentrierenden Lösung 12 erhöht. Dieser zusätzliche Volumenstrom 62 der Flüssigkeit 14 kann am Punkt C der Flüssigkeit 14 entnommen werden. Ebenfalls am Punkt C kann der durch Stoffübergang verringerte Volumenstrom der aufzukonzentrierenden Lösung 12 durch einen Volumenstrom 64 aufgefüllt werden. Außerdem ist es möglich, am Punkt C einen Teil 66 der aufzukonzentrierenden Lösung 12 aus dem System auszuschleusen.

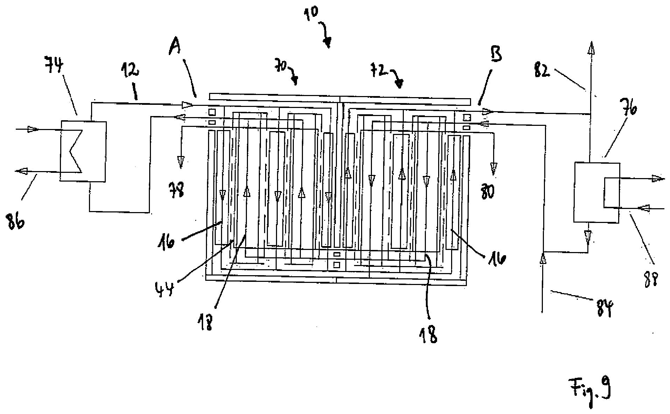

Figur 9 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10. Die Kristallisationsvorrichtung 10 umfasst zwei hintereinander geschaltete Stufen 70 und 72, die den gleichen Aufbau aufweisen wie die in Figur 7 gezeigten Stufen 50 und 52, wobei die Stufen 70 und 72 allerdings in umgekehrter Richtung wie die Stufen 50 und 52 durchströmt werden.

In der in Figur 9 dargestellten Ausführungsform werden sowohl die Strömungskanäle 16 als auch die Strömungskanäle 18 von der aufzukonzentrierenden Lösung 12 durchströmt. Beim Durchströmen der Strömungskanäle 18 dient die aufzukonzentrierende Lösung 12 demnach als Kühlmittel zur Erzeugung der Dampfdruckdifferenz über die Membranwände 20.

Neben der Kristallisationsvorrichtung 10 umfasst das in Figur 9 dargestellte System Wärmetauscher 74 und 76. Der Wärmetauscher 74 erwärmt die am Punkt A aus den Strömungskanälen 18 der Kristallisationsvorrichtung 10 austretende aufzukonzentrierende Lösung 12, die beim Strömen durch die Strömungskanäle 18 vorgewärmt wurde, weiter. Die aufzukonzentrierende Lösung 12 wird so weit erwärmt, dass sie beim Strömen durch die Kristallisationsvorrichtung 10 immer ein treibendes Potential von der erwärmten aufzukonzentrierenden Lösung 12 über den das Lösungsmittel abführenden Strömungskanal 44 in den Strömungskanal 18 besitzt. Die von dem Wärmetauscher 74 erwärmte aufzukonzentrierende Lösung 12 wird den Strömungskanälen 16 der Stufe 70 zugeführt.

Das sich in den Strömungskanälen 44 ansammelnde Lösungsmittel kann an den Stellen 78 oder 80 aus der Kristallisationsvorrichtung 10 abgeführt werden.

Am Punkt B tritt die abgereicherte, aufzukonzentrierende Lösung 12 aus den Strömungskanälen 16 der Kristallisationsvorrichtung 10 aus. Die aufzukonzentrierende Lösung 12 kann dann ganz oder teilweise mit einem Strom 82 aus dem System abgeführt werden. Sofern die am Punkt B aus der Kristallisationsvorrichtung 10 austretende aufzukonzentrierende Lösung 12 ganz oder teilweise wieder der Kristallisationsvorrichtung 10 zugeführt wird, wird die aufzukonzentrierende Lösung 12 mit dem Wärmetauscher 76 so weit abgekühlt, dass sie beim Eintritt in die Strömungskanäle 18 am Punkt B eine solche Temperatur aufweist, dass über die Strömungskanäle 44 zur aufzukonzentrierenden Lösung 12 in den Strömungskanälen 16 immer ein treibendes Potential besteht. Über einen Strom 84 kann die aufzukonzentrierende Lösung 12 nachgeführt werden. Die mittels des Wärmetauschers 76 abgekühlte aufzukonzentrierende Lösung 12 wird den Strömungskanälen 18 der Stufe 72 zugeführt.

Der Wärmetauscher 74 wird über einen Heizstrom 86 erwärmt, und der Wärmetauscher 76 wird über einen Kühlstrom 88 abgekühlt. Alternativ können anders ausgestaltete Heiz- bzw. Kühlelemente eingesetzt werden.

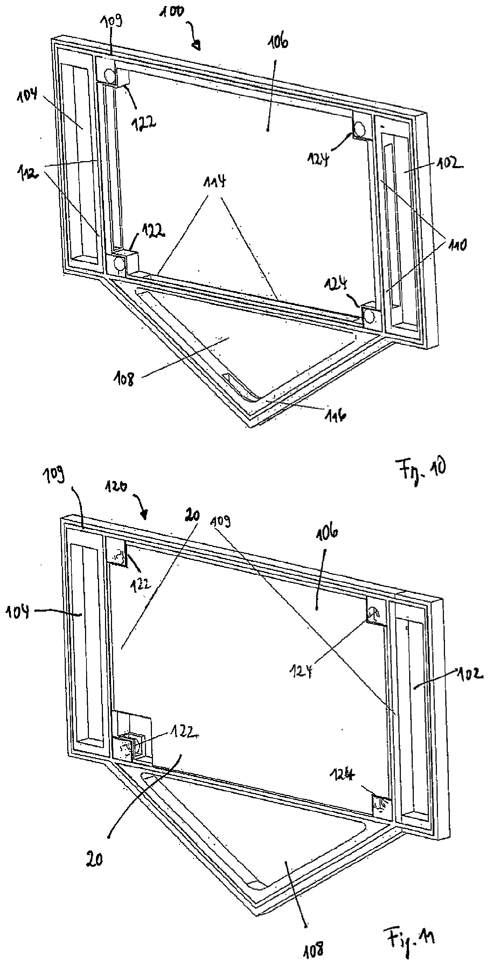

Das hierin beschriebene System zur Kristallisation eines in einem Lösungsmittel gelösten auszukristallisierenden Stoffs und insbesondere die Kristallisationsvorrichtung können aus einer Mehrzahl von Rahmenelementen aufgebaut sein, die zur Bildung unterschiedlicher Funktionseinheiten zusammenfassbar sind. Dabei kann die Kristallisationsvorrichtung 10 beispielsweise aus zwei unterschiedlichen Typen von Rahmenelementen aufgebaut sein, die abwechselnd zu einem Stapel zusammengefasst sind. In den Figuren 10 und 11 bzw. 12 und 13 sind derartige Paare von Rahmenelementen gezeigt, die im Folgenden beschrieben werden.

Figur 10 zeigt ein Rahmenelement 100 eines ersten Typs von Rahmenelementen für die Kristallisationsvorrichtung 10. Das Rahmenelement 100 weist einen mit einem Verteilungskanal 102 und einem Sammelkanal 104 versehenen äußeren Rahmen, einen vom äußeren Rahmen begrenzten zentralen Innenbereich 106 sowie einen unterhalb des zentralen Innenbereichs 106 angeordneten Sedimentsammelbereich 108 auf. Zudem ist das Rahmenelement 100 beidseitig jeweils mit einer Schweißstegstruktur 109 versehen, welche die Kanäle 102 und 104, den zentralen Innenbereich 106 und den Sedimentsammelbereich 108 abgrenzt.

Die Verteilungs- und Sammelkanäle 102 und 104 sind jeweils über eine Öffnung 110 bzw. 112 im Rahmenelement 100 mit dem zentralen Innenbereich 106 verbunden. Ferner ist der zentrale Innenbereich 106 über eine Öffnung 114 im Rahmenelement 100 mit dem Sedimentsammelbereich 108 verbunden.

Der Verteilungskanal 102 führt die aufzukonzentrierende Lösung 12 über die Öffnung 110 in den zentralen Innenbereich 106. Von dort aus gelangt die aufzukonzentrierende Lösung 12 über die Öffnung 112 in den Sammelkanal 104. Über die Öffnung 114 können die Kristalle in den Sedimentsammelbereich 108 sedimentieren. Unterhalb des Sedimentsammelbereichs 108 kann eine Öffnung 116 im Rahmenelement 100 vorgesehen sein, über die die in den Sedimentsammelbereich 108 sedimentierten Kristalle entfernt werden können. Der zentrale Innenbereich 106 des Rahmenelements 100 kann eine Gitterstruktur zum Vermischen der aufzukonzentrierenden Lösung 12 aufweisen.

Figur 11 zeigt ein Rahmenelement 120 eines zweiten Typs von Rahmenelementen für die Kristallisationsvorrichtung 10. Genauso wie das in Figur 10 dargestellte Rahmenelement 100 weist das Rahmenelement 120 einen mit einem Verteilungskanal 102 und einem Sammelkanal 104 versehenen äußeren Rahmen, einen vom äußeren Rahmen begrenzten zentralen Innenbereich 106 sowie einen unterhalb des zentralen Innenbereichs 106 angeordneten Sedimentsammelbereich 108 auf. Anders als beim Rahmenelement 100 sind beim Rahmenelement 120 der Verteilungskanal 102, der Sammelkanal 104 und der Sedimentsammelbereich 108 nicht mit dem zentralen Innenbereich 106 durch Öffnungen im Rahmenelement 120 verbunden. Des Weiteren ist das Rahmenelement 120 beidseitig jeweils mit einer Schweißstegstruktur 109 versehen.

Im Rahmenelement 120 wird die Potentialdifferenz für die Aufkonzentration und Kristallisation erzeugt. Das Rahmenelement 120 ist auf beiden Seiten mit einer für das dampfförmige Lösungsmittel, nicht jedoch für das flüssige Lösungsmittel durchlässigen Membranwand 20 versehen. Die Membranwand 20 überdeckt den gesamten zentralen Innenbereich 106, wobei der Verteilungskanal 102, der Sammelkanal 104 und der Sedimentsammelbereich 108 nicht von der Membranwand 20 bedeckt sind. Vorzugsweise ist die Membranwand 20 mit dem Rahmenelement 120 verschweißt.

Über an den Ecken des zentralen Innenbereichs 106 angeordnete Zuführungen 122 und Abführungen 124 wird die Flüssigkeit 14 mit dem im Vergleich zur aufzukonzentrierenden Lösung 12 niedrigeren Dampfdruck in den zentralen Innenbereich 106 geführt bzw. von dort abgeführt. Der zentrale Innenbereich 106 des Rahmenelements 120 kann eine Gitterstruktur zum Vermischen der Flüssigkeit 14 und zum Stützen der Membranwand 20 aufweisen. Die Zu- und Abführungen 122 und 124 sind nicht von der Membranwand 20 bedeckt.

Die Kanäle der Zuführungen 122 und 124 durchlaufen ferner das in Figur 10 gezeigte Rahmenelement 100, jedoch sind die Zuführungen 122 und 124 im Rahmenelement 100 anders als im Rahmenelement 120 nicht durch Öffnungen mit dem zentralen Innenbereich 106 verbunden.

Die in den Figuren 10 und 11 gezeigten Typen von Rahmenelementen 100 und 120 können über die Schweißstegstrukturen 109 miteinander zu Stapeln verschweißt werden, wobei die Rahmenelemente 100 und 120 aneinandergereiht werden. Andere Verbindungsmöglichkeiten wie zum Beispiel Kleben sind ebenso denkbar. Dabei sind die Rahmenelemente 100 und 120 zweckmäßigerweise so ausgeführt, dass die Verteilungskanäle 102, die Sammelkanäle 104, die Sedimentsammelbereiche 108 sowie die Zuführungen 122 und die Abführungen 124 der aneinandergereihten Rahmenelemente 100 und 120 jeweils miteinander fluchten.

Mit den Rahmenelementen 100 und 120 können Kristallisationsvorrichtungen 10 geschaffen werden, bei denen ein jeweiliger die Flüssigkeit 14 führender Strömungskanal 18 unmittelbar an die Membranwand 20 eines jeweiligen die aufzukonzentrierende Lösung 12 führenden Strömungskanals 16 angrenzt. Beispiele für derartige Kristallisationsvorrichtungen 10 sind in den Figuren 1 bis 5 und 8 gezeigt.

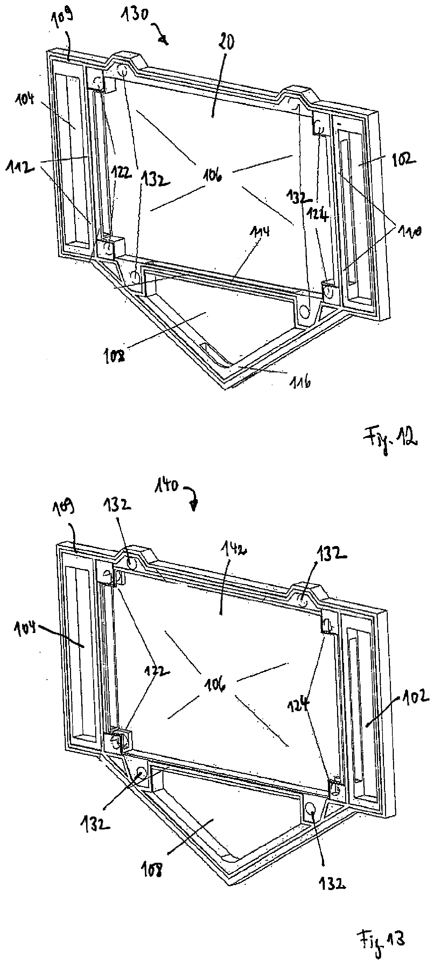

Kristallisationsvorrichtungen 10, wie sie beispielsweise in den Figuren 6, 7 und 9 gezeigt sind und bei denen zwischen einem jeweiligen die aufzukonzentrierende Lösung 12 führenden Strömungskanal 16 und einem jeweiligen die Flüssigkeit 14 führenden Strömungskanal 18 ein zum Abführen des durch die Membranwand 20 gelangten Lösungsmittels vorgesehener Strömungskanal 44 angeordnet ist, können mit den in den Figuren 12 und 13 gezeigten Rahmenelementen hergestellt werden.

Figur 12 zeigt ein Rahmenelement 130 eines ersten Typs von Rahmenelementen, das weitgehende Übereinstimmungen mit dem in Figur 10 dargestellten Rahmenelement 100 aufweist. Genauso wie das in Figur 10 dargestellte Rahmenelement 100 weist das Rahmenelement 130 einen mit einem Verteilungskanal 102 und einem Sammelkanal 104 versehenen äußeren Rahmen, einen vom äußeren Rahmen begrenzten zentralen Innenbereich 106 sowie einen unterhalb des zentralen Innenbereichs 106 angeordneten Sedimentsammelbereich 108 auf. Ferner sind die Verteilungs- und Sammelkanäle 102 und 104 jeweils über eine Öffnung 110 bzw. 112 im Rahmenelement 130 mit dem zentralen Innenbereich 106 verbunden. Der zentrale Innenbereich 106 ist über eine Öffnung 114 im Rahmenelement 130 mit dem Sedimentsammelbereich 108 verbunden. Unterhalb des Sedimentsammelbereichs 108 ist eine Öffnung 116 zum Entfernen der in den Sedimentsammelbereich 108 sedimentierten Kristalle vorgesehen. Ferner durchlaufen die Kanäle der Zuführungen 122 und Abführungen 124 das Rahmenelement 130, sind jedoch nicht in den zentralen Innenbereich 106 geöffnet.

Darüber hinaus ist das Rahmenelement 130 auf beiden Seiten mit einer für das dampfförmige Lösungsmittel, nicht jedoch für das flüssige Lösungsmittel durchlässigen Membranwand 20 versehen. Die Membranwand 20 überdeckt den gesamten zentralen Innenbereich 106, wobei der Verteilungskanal 102, der Sammelkanal 104, der Sedimentsammelbereich 108, die Zuführungen 122 und die Abführungen 124 nicht von der Membranwand 20 bedeckt sind. Vorzugsweise ist die Membranwand 20 mit dem Rahmenelement 130 verschweißt.

Ferner weist das Rahmenelement 130 Durchlässe 132 auf, durch die das durch die Membranwand 20 gelangte Lösungsmittel abgeführt werden kann. Die Durchlässe 132 sind nicht von der Membranwand 20 bedeckt.

Während des Kristallisationsprozesses wird die aufzukonzentrierende Lösung 12 über den Verteilungskanal 102 und die Öffnung 110 in den zentralen Innenbereich 106 des Rahmenelements 130 geführt. Von dort aus gelangt die aufzukonzentrierende Lösung 12 über die Öffnung 112 in den Sammelkanal 104. Über die Öffnung 114 können die erzeugten Kristalle in den Sedimentsammelbereich 108 sedimentieren. Der zentrale Innenbereich 106 des Rahmenelements 130 kann eine Gitterstruktur zum Vermischen der aufzukonzentrierenden Lösung 12 und zum Stützen der Membranwand 20 aufweisen.

Figur 13 zeigt ein Rahmenelement 140 eines zweiten Typs von Rahmenelementen, das weitgehende Übereinstimmungen mit dem in Figur 11 dargestellten Rahmenelement 120 aufweist. Genauso wie das in Figur 11 dargestellte Rahmenelement 120 weist das Rahmenelement 140 einen mit einem Verteilungskanal 102 und einem Sammelkanal 104 versehenen äußeren Rahmen, einen vom äußeren Rahmen begrenzten zentralen Innenbereich 106 sowie einen unterhalb des zentralen Innenbereichs 106 angeordneten Sedimentsammelbereich 108 auf. Der Verteilungskanal 102, der Sammelkanal 104 und der Sedimentsammelbereich 108 sind nicht mit dem zentralen Innenbereich 106 durch Öffnungen im Rahmenelement 140 verbunden. Außerdem sind an den Ecken des zentralen Innenbereichs 106 Zuführungen 122 und Abführungen 124 angeordnet. Darüber hinaus sind Durchlässe 132 in das Rahmenelement 140 eingefügt.

Das Rahmenelement 140 ist auf beiden Seiten mit einer dampf- und flüssigkeitsdichten Folie 142 versehen. Die Folie 142 überdeckt den gesamten zentralen Innenbereich 106, wobei der Verteilungskanal 102, der Sammelkanal 104, der Sedimentsammelbereich 108, die Zuführungen 122, die Abführungen 124 und die Durchlässe 132 nicht von der Folie 142 bedeckt sind. Vorzugsweise ist die Folie 142 mit dem Rahmenelement 140 verschweißt.

Über die Zuführungen 122 und Abführungen 124 wird die Flüssigkeit 14 mit dem im Vergleich zur aufzukonzentrierenden Lösung 12 niedrigeren Dampfdruck in den zentralen Innenbereich 106 des Rahmenelements 140 geführt bzw. von dort abgeführt. Der zentrale Innenbereich 106 des Rahmenelements 140 kann eine Gitterstruktur zum Vermischen der Flüssigkeit 14 und zum Stützen der Folie 142 aufweisen.

Die Rahmenelemente 130 und 140 werden zum Aufbau einer Kristallisationsvorrichtung 10 abwechselnd aneinandergereiht und vorzugsweise miteinander verschweißt. Dabei sind die Rahmenelemente 130 und 140 zweckmäßigerweise so ausgeführt, dass die Verteilungskanäle 102, die Sammelkanäle 104, die Sedimentsammelbereiche 108, die Zuführungen 122, die Abführungen 124 und die Durchlässe 132 der aneinandergereihten Rahmenelemente 130 und 140 jeweils miteinander fluchten.

Während des Betriebs der Kristallisationsvorrichtung 10 sammelt sich das durch die Membranwand 20 gelangte Lösungsmittel in dem Zwischenraum, der sich durch das abwechselnde Aneinanderreihen der Rahmenelemente 130 und 140 zwischen einer jeweiligen Membranwand 20 und der benachbarten Folie 142 gebildet hat. Das dort gesammelte Lösungsmittel kann dann über die Durchlässe 132 abgeführt werden.

Geeignete Werkstoffe für die vorstehend beschriebenen Rahmenelemente 100, 120, 130 und 140 sind beispielsweise Polypropylen, Polyethylen, Polyamide und Polyvinylidenfluorid.

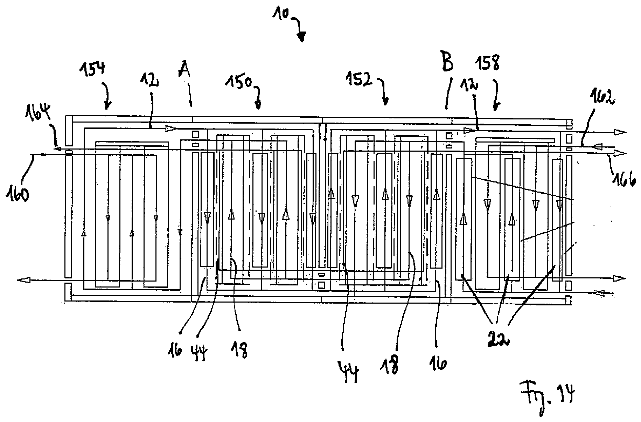

Figur 14 zeigt in schematischer Darstellung eine beispielhafte Ausführungsform eines Systems zur Kristallisation eines in einem Lösungsmittel gelösten auszukristallisierenden Stoffs mit einer Kristallisationsvorrichtung 10. Die Kristallisationsvorrichtung 10 umfasst zwei hintereinander geschaltete Stufen 150 und 152, die identisch sind mit den in Figur 9 gezeigten Stufen 70 und 72. Die in Figur 9 dargestellten Wärmetauscher 74 und 76 sind in Figur 14 durch aus Rahmenelementen 130 und 140 aufgebaute Wärmetauscher 154 und 158 ersetzt worden.

Der Wärmetauscher 154 ist aus Rahmenelementen 130 und 140 aufgebaut, wobei die Rahmenelemente 130 und 140 abwechselnd zu Stapeln verbaut sind und die Membranwand 20 beim Rahmenelement 130 weggelassen worden ist. Durch die zentralen Innenbereiche 106 der Rahmenelemente 130 strömt die aufzukonzentrierende Lösung 12, während die zentralen Innenbereiche 106 der Rahmenelemente 140 von einem dem Wärmetauscher 154 von außen zugeführten Heizstrom 160 durchflossen werden. Alternativ wäre es auch denkbar, die aufzukonzentrierende Lösung 12 durch die zentralen Innenbereiche 106 der Rahmenelemente 140 und den Heizstrom 160 durch die zentralen Innenbereiche 106 der Rahmenelemente 130 strömen zu lassen.

Die aufzukonzentrierende Lösung 12 tritt am Punkt A aus den Strömungskanälen 18 der Kristallisationsvorrichtung 10 in den Wärmetauscher 154 ein. Durch Wärmeübertragung von dem Heizstrom 160 durch die Folien 142 der Rahmenelemente 140 hindurch wird die aufzukonzentrierende Lösung beim Durchlaufen des Wärmetauschers 154 erwärmt. Die so erwärmte aufzukonzentrierende Lösung 12 wird am Punkt A den Strömungskanälen 16 der Kristallisationsvorrichtung 10 zugeführt.

In entsprechender Weise ist der Wärmetauscher 158 ist aus Rahmenelementen 130 und 140 aufgebaut, wobei die Rahmenelemente 130 und 140 abwechselnd zu Stapeln verbaut sind und die Membranwand 20 beim Rahmenelement 130 weggelassen worden ist. Durch die zentralen Innenbereiche 106 der Rahmenelemente 130 strömt die aufzukonzentrierende Lösung 12, während die zentralen Innenbereiche 106 der Rahmenelemente 140 von einem dem Wärmetauscher 158 von außen zugeführten Kühlstrom 162 durchflossen werden.

Die aufzukonzentrierende Lösung 12 tritt am Punkt B aus den Strömungskanälen 16 der Kristallisationsvorrichtung 10 in den Wärmetauscher 158 ein. Mit Hilfe des Kühlstroms 162 wird die aufzukonzentrierende Lösung 12 beim Durchlaufen des Wärmetauschers 158 gekühlt. Anschließend wird die gekühlte aufzukonzentrierende Lösung 12 am Punkt B den Strömungskanälen 18 der Kristallisationsvorrichtung 10 zugeführt.

Durch die im Wärmetauscher 158 stattfindende kontinuierliche Abkühlung der aufzukonzentrierenden Lösung 12 verringert sich die Löslichkeit der meisten gelösten Stoffe und eine weitere Kristallisation findet statt. Die so erzeugten Kristalle sedimentieren in die aus den Sedimentsammelbereichen 108 der Rahmenelemente 130 und 140 gebildeten Sedimentsammelbehälter 22.

Das in den Strömungskanälen 44 der Kristallisationsvorrichtung 10 gesammelte Lösungsmittel kann über die Durchlässe 132 in den Rahmenelementen 130 und 140 abgeführt werden und verlässt das System an den Stellen 164 und 166.

Alternativ zu der dampfdurchlässigen, jedoch flüssigkeitsdichten Membranwand 20 kann in die oben beschriebenen Kristallisationsvorrichtungen 10 eine ionenselektive Membranwand eingesetzt werden, auf deren einen Seite sich anstelle der Flüssigkeit 14 eine Zuglösung mit hoher Konzentration und damit hohem osmotischen Druck befindet und auf deren anderer Seite sich die aufzukonzentrierende Lösung 12 mit einer geringeren Konzentration und geringerem osmotischen Druck befindet. Aufgrund der Konzentrationsunterschiede und der damit verbundenen osmotischen Druckdifferenz gelangt das Lösungsmittel durch die ionenselektive Membran in die Zuglösung. Die Ionen des auszukristallisierenden Stoffs werden von der Membranwand zurückgehalten und die erwünschte Aufkonzentration der Lösung entsteht.

Zu beachten ist, dass bei der Vorwärtsosmose stets der die Zuglösung führende Strömungskanal 18 unmittelbar an die ionenselektive Membranwand des die aufzukonzentrierende Lösung 12 führenden Strömungskanals 16 angrenzt. Folglich kann die Vorwärtsosmose nur mit den in den Figuren 1 bis 5 und 8 gezeigten Kristallisationsvorrichtungen 10 sowie den in den Figuren 10 und 11 gezeigten Rahmenelementen 100 und 120 realisiert werden. Sämtliche im Zusammenhang mit diesen Figuren beschriebene Ausgestaltungen können für die Vorwärtsosmose Verwendung finden.

### Bezugszeichenliste

- 10: Kristallisationsvorrichtung
- 12: aufzukonzentrierende Lösung
- 14: Flüssigkeit
- 16: Strömungskanal
- 18: Strömungskanal
- 20: Membranwand
- 22: Sedimentsammelbehälter
- 30: Stufe
- 32: Stufe
- 34: Stufe
- 36: Stufe
- 38: Stufe
- 40: Stufe
- 42: Stufe
- 44: Strömungskanal
- 46: Wand
- 50: Stufe
- 52: Stufe
- 54: Stufe
- 56: Wärmetauscher
- 58: Wärmetauscher
- 60: Wärmetauscher
- 62: Strom
- 64: Strom
- 66: Strom
- 70: Stufe
- 72: Stufe
- 74: Wärmetauscher
- 76: Wärmetauscher
- 78: Stelle
- 80: Stelle
- 82: Strom
- 84: Strom
- 86: Heizstrom
- 88: Kühlstrom
- 100: Rahmenelement
- 102: Verteilungskanal
- 104: Sammelkanal
- 106: zentraler Innenbereich
- 108: Sedimentsammelbereich
- 109: Schweißstegstruktur
- 110: Öffnung
- 112: Öffnung
- 114: Öffnung
- 116: Öffnung
- 120: Rahmenelement
- 122: Zuführung
- 124: Abführung
- 130: Rahmenelement
- 132: Durchlass
- 140: Rahmenelement
- 142: Folie
- 150: Stufe
- 152: Stufe
- 154: Wärmetauscher
- 158: Wärmetauscher
- 160: Heizstrom
- 162: Kühlstrom
- 164: Stelle
- 166: Stelle

## Patentansprüche

1. System zur Kristallisation eines in einem Lösungsmittel gelösten auszukristallisierenden Stoffs, mit einer von einer aufzukonzentrierenden Lösung (12), die das Lösungsmittel mit dem darin gelösten auszukristallisierenden Stoff aufweist, und von einer Flüssigkeit (14), die eine niedrigere Temperatur als die aufzukonzentrierende Lösung (12) aufweist, durchströmten Kristallisationsvorrichtung (10), wobei die Kristallisationsvorrichtung (10) wenigstens einen die aufzukonzentrierende Lösung (12) führenden Strömungskanal (16) und wenigstens einen die Flüssigkeit (14) führenden Strömungskanal (18) aufweist, wobei der Innenraum eines jeweiligen die aufzukonzentrierende Lösung (12) führenden Strömungskanals (16) zumindest teilweise durch eine für das dampfförmige Lösungsmittel, nicht jedoch für das flüssige Lösungsmittel durchlässige Membranwand (20) begrenzt ist und ein jeweiliger die Flüssigkeit (14) führender Strömungskanal (18) zu wenigstens einem jeweiligen die aufzukonzentrierende Lösung (12) führenden Strömungskanal (16) benachbart ist, wodurch sich eine Dampfdruckdifferenz über die Membranwand (20) einstellt, so dass Lösungsmittel aus der aufzukonzentrierenden Lösung (12) durch die Membranwand (20) hindurch gelangte, wobei
**dadurch gekennzeichnet dass**,
die Kristallisationsvorrichtung (10) eine Mehrzahl von Rahmenelementen (100, 120, 130, 140) aufweist, die zur Bildung unterschiedlicher Funktionseinheiten wie insbesondere des wenigstens einen die aufzukonzentrierende Lösung (12) führenden Strömungskanals (16) und des wenigstens einen die Flüssigkeit (14) führenden Strömungskanals (18) zu wenigstens zwei, insbesondere wenigstens zehn Rahmenelemente (100, 120, 130, 140) umfassenden Stapeln zusammenfassbar sind, wobei die Rahmenelemente (100, 120, 130, 140) jeweils einen mit Kanälen (102, 104) versehenen äußeren Rahmen, einen vom äußeren Rahmen begrenzten zentralen Innenbereich (106) und einen unterhalb des zentralen Innenbereichs (106) angeordneten Sedimentsammelbereich (108) aufweisen,
die Kristallisationsvorrichtung (10) wenigstens zwei unterschiedliche Typen von Rahmenelementen (100, 120, 130, 140) aufweist, die abwechselnd zu einem Stapel zusammengefasst sind, wobei der zentrale Innenbereich (106) des einen Typs von Rahmenelementen (100, 130) einen Teil des wenigstens einen die aufzukonzentrierende Lösung (12) führenden Strömungskanals (16) bildet und der zentrale Innenbereich (106) des anderen Typs von Rahmenelementen (120, 140) einen Teil des wenigstens einen die Flüssigkeit (14) führenden Strömungskanals (18) bildet,
auf beiden Seiten des zentralen Innenbereichs (106) des einen Typs von Rahmenelementen (120, 130) jeweils eine Membranwand (20) angeordnet, insbesondere angeschweißt ist, die für das dampfförmige Lösungsmittel, nicht jedoch für das flüssige Lösungsmittel durchlässig ist,
auf beiden Seiten des zentralen Innenbereichs (106) des anderen Typs von Rahmenelementen (140) jeweils eine dampf- und flüssigkeitsdichte Folie (142) angeordnet, insbesondere angeschweißt ist, und
ein Zwischenraum zwischen jeweils einer Membranwand (20) und einer benachbarten Folie (142) einen Teil eines zum Abführen des durch die Membranwand (20) gelangten Lösungsmittels vorgesehenen Strömungskanals (44) bildet.

2. System nach einem der vorhergehenden Ansprüche,
**dadurch gekennzeichnet, dass**
die Flüssigkeit (14) die Kristallisationsvorrichtung (10) im Gegenstrom zur aufzukonzentrierenden Lösung (12) durchströmt.

3. System nach einem der vorhergehenden Ansprüche,
**dadurch gekennzeichnet, dass**
die Kristallisationsvorrichtung (10) mehrere hintereinander geschaltete Stufen (36, 38, 40) aufweist, wobei jede Stufe (36, 38, 40) mehrere zueinander parallele die aufzukonzentrierende Lösung (12) führende Strömungskanäle (16) umfasst und wenigstens zwei der Stufen (36, 38, 40) eine unterschiedliche Anzahl von die aufzukonzentrierende Lösung (12) führenden Strömungskanälen (16) aufweisen.

4. System nach einem der vorhergehenden Ansprüche,
**dadurch gekennzeichnet, dass**
das System einen Wärmetauscher (56) aufweist, der die aus der Kristallisationsvorrichtung (10) herausströmende Flüssigkeit (14) abkühlt und mit der daraus gewonnenen Energie die aufzukonzentrierende Lösung (12) aufwärmt.

5. System nach einem der vorhergehenden Ansprüche,
**dadurch gekennzeichnet, dass**
das System ein Kühlelement (76) und ein Heizelement (74) aufweist und sowohl der wenigstens eine die aufzukonzentrierende Lösung (12) führende Strömungskanal (16) als auch der wenigstens eine die Flüssigkeit (14) führende Strömungskanal (18) von der aufzukonzentrierenden Lösung (12) durchströmt sind, wobei einem Ausgang des wenigstens einen die aufzukonzentrierende Lösung (12) führenden Strömungskanals (16) das Kühlelement (76) und ein Eingang des wenigstens einen die Flüssigkeit (14) führenden Strömungskanals (18) nachgeschaltet sind und einem Ausgang des wenigstens einen die Flüssigkeit (14) führenden Strömungskanals (18) das Heizelement (74) und ein Eingang des wenigstens einen die aufzukonzentrierende Lösung (12) führenden Strömungskanals (16) nachgeschaltet sind.

6. Verfahren zur Kristallisation eines in einem Lösungsmittel gelösten auszukristallisierenden Stoffs, wobei eine aufzukonzentrierende Lösung (12), die das Lösungsmittel mit dem darin gelösten auszukristallisierenden Stoff aufweist, durch wenigstens einen Strömungskanal (16) geführt wird und eine Flüssigkeit (14), die eine niedrigere Temperatur als die aufzukonzentrierende Lösung (12) aufweist, durch wenigstens einen weiteren Strömungskanal (18) geführt wird, wobei eine Kristallisationsvorrichtung (10) den wenigstens einen die aufzukonzentrierende Lösung (12) führenden Strömungskanal (16) und den wenigstens einen die Flüssigkeit (14) führenden Strömungskanal (18) aufweist, wobei der Innenraum eines jeweiligen die aufzukonzentrierende Lösung (12) führenden Strömungskanals (16) zumindest teilweise durch eine für das dampfförmige Lösungsmittel, nicht jedoch für das flüssige Lösungsmittel durchlässige Membranwand (20) begrenzt ist und ein jeweiliger die Flüssigkeit (14) führender Strömungskanal (18) zu zumindest einem jeweiligen die aufzukonzentrierende Lösung (12) führenden Strömungskanal (16) benachbart ist, wodurch sich eine Dampfdruckdifferenz über die Membranwand (20) einstellt, so dass Lösungsmittel aus der aufzukonzentrierenden Lösung (12) durch die Membranwand (20) hindurch gelangt, wobei
**dadurch gekennzeichnet dass**,
die Kristallisationsvorrichtung (10) eine Mehrzahl von Rahmenelementen (100, 120, 130, 140) aufweist, die zur Bildung unterschiedlicher Funktionseinheiten wie insbesondere des wenigstens einen die aufzukonzentrierende Lösung (12) führenden Strömungskanals (16) und des wenigstens einen die Flüssigkeit (14) führenden Strömungskanals (18) zu wenigstens zwei, insbesondere wenigstens zehn Rahmenelemente (100, 120, 130, 140) umfassenden Stapeln zusammenfassbar sind, wobei die Rahmenelemente (100, 120, 130, 140) jeweils einen mit Kanälen (102, 104) versehenen äußeren Rahmen, einen vom äußeren Rahmen begrenzten zentralen Innenbereich (106) und einen unterhalb des zentralen Innenbereichs (106) angeordneten Sedimentsammelbereich (108) aufweisen,
die Kristallisationsvorrichtung (10) wenigstens zwei unterschiedliche Typen von Rahmenelementen (100, 120, 130, 140) aufweist, die abwechselnd zu einem Stapel zusammengefasst sind, wobei der zentrale Innenbereich (106) des einen Typs von Rahmenelementen (100, 130) einen Teil des wenigstens einen die aufzukonzentrierende Lösung (12) führenden Strömungskanals (16) bildet und der zentrale Innenbereich (106) des anderen Typs von Rahmenelementen (120, 140) einen Teil des wenigstens einen die Flüssigkeit (14) führenden Strömungskanals (18) bildet,
auf beiden Seiten des zentralen Innenbereichs (106) des einen Typs von Rahmenelementen (120, 130) jeweils eine Membranwand (20) angeordnet, insbesondere angeschweißt ist, die für das dampfförmige Lösungsmittel, nicht jedoch für das flüssige Lösungsmittel durchlässig ist,
auf beiden Seiten des zentralen Innenbereichs (106) des anderen Typs von Rahmenelementen (140) jeweils eine dampf- und flüssigkeitsdichte Folie (142) angeordnet, insbesondere angeschweißt ist, und
ein Zwischenraum zwischen jeweils einer Membranwand (20) und einer benachbarten Folie (142) einen Teil eines zum Abführen des durch die Membranwand (20) gelangten Lösungsmittels vorgesehenen Strömungskanals (44) bildet.

## Claims

1. A system for the crystallization of a material dissolved and to be crystallized in a solvent, having a crystallization apparatus (10) flowed through by a solution (12) to be concentrated, which comprises the solvent with the material dissolved and to be crystallized therein, and by a liquid (14) that has a lower temperature than the solution (12) to be concentrated, wherein the crystallization apparatus (10) has at least one flow passage (16) conducting the solution (12) to be concentrated and has at least one flow passage (18) conducting the liquid (14), wherein the internal space of a respective flow passage (16) conducting the solution (12) to be concentrated is bound at least partly by a membrane wall (20) permeable for the vaporous solvent but not for the liquid solvent, and a respective flow passage (18) conducting the liquid (14) is adjacent to at least one respective flow passage (16) conducting the solution (12) to be concentrated, whereby a vapor pressure difference is set via the membrane wall (20) in such a way that the solvent passes from the solution (12) to be concentrated through the membrane wall (20),
**characterized in that**
the crystallization apparatus (10) has a plurality of frame elements (100, 120, 130, 140) that can be combined with one another for the formation of different functional units, such as in particular of the at least one flow passage (16) conducting the solution (12) to be concentrated and of the at least one flow passage (18) conducting the liquid (14), to form stacks comprising at least two, in particular at least ten frame elements (100, 120, 130, 140), wherein the frame elements (100, 120, 130, 140) respectively have an outer frame provided with passages (102, 104), a central internal region (106) bound by an outer frame and a sediment collection region (108) arranged beneath the central internal region (106),
the crystallization apparatus (10) has at least two different types of frame elements (100, 120, 130, 140) that are alternatingly combined to form a stack, wherein the central internal region (106) of the one type of frame elements (100, 130) forms a part of the at least one flow passage (16) conducting the solution (12) to be concentrated and the central internal region (106) of the other type of frame element (120, 140) forms a part of the at least one flow passage (18) conducting the liquid (14),
a respective membrane wall (20) is arranged at both sides of the central internal region (106) of one type of frame elements (120, 130), in particular is welded thereto, the membrane wall being permeable for the vaporous solvent but not for the liquid solvent,
a vapor-tight and liquid-tight film (142) is respectively arranged at both sides of the central internal region (106) of the other type of frame elements (140), in particular is welded thereto, and
an intermediate space between respectively one membrane wall (20) and an adjacent film (142) forms a part of the flow passage (44) provided for the conducting away of the solvent which has passed through the membrane wall (20).

2. The system in accordance with any of the preceding claims, **characterized in that** the liquid (14) flows through the crystallization apparatus (10) in counter-flow with respect to the solution (12) to be concentrated.

3. The system in accordance with any of the preceding claims, **characterized in that** the crystallization apparatus (10) has a plurality of stages (36, 38, 40) switched one after the other, wherein each stage (36, 38, 40) comprises a plurality of flow passages (16) conducting the solution (12) to be concentrated, which are arranged in parallel with one another, and wherein at least two of the stages (36, 38, 40) have a different number of flow passages (16) conducting the solution (12) to be concentrated.

4. The system in accordance with any of the preceding claims, **characterized in that** the system has a heat exchanger (56) that cools a liquid (14) flowing out of the crystallization apparatus (10) and heats the solution (12) to be concentrated with the energy obtained therefrom.

5. The system in accordance with any of the preceding claims, **characterized in that** the system has a cooling element (76) and a heating element (74) and both the at least one flow passage (16) conducting the solution (12) to be concentrated and the at least one flow passage (18) conducting the liquid (14) are flowed through by the solution (12) to be concentrated, wherein the cooling element (76) and an input of the at least one flow passage (18) conducting the liquid (14) are connected downstream of an output of the at least one flow passage (16) conducting the solution (12) to be concentrated and wherein the heating element (74) and an input of the at least one flow passage (16) conducting the solution (12) to be concentrated are connected downstream of an output of the at least one flow passage (18) conducting the liquid (14).

6. A method for the crystallization of a material dissolved and to be crystallized in a solvent, wherein a solution (12) to be concentrated, which comprises the solvent having the material dissolved and to be crystallized therein, is conducted through at least one flow passage (16) and a liquid (14) that has a lower temperature than the solution (12) to be concentrated is conducted through at least one further flow passage (18), wherein a crystallization apparatus (10) has the at least one flow passage (16) conducting the solution (12) to be concentrated and has the at least one flow passage (18) conducting the liquid (14), wherein the internal space of a respective flow passage (16) conducting the solution (12) to be concentrated is bound at least partly by a membrane wall (20) permeable for the vaporous solvent but not for the liquid solvent and wherein a respective flow passage (18) conducting the liquid (14) is adjacent to at least one respective flow passage (16) conducting the solution (12) to be concentrated, whereby a vapor pressure difference is set via the membrane wall (20) in such a way that the solvent passes from the solution (12) to be concentrated through the membrane wall (20),
**characterized in that**
the crystallization apparatus (10) has a plurality of frame elements (100, 120, 130, 140) that can be combined with one another for the formation of different functional units, such as in particular of the at least one flow passage (16) conducting the solution (12) to be concentrated and of the at least one flow passage (18) conducting the liquid (14), to form stacks comprising at least two, in particular at least ten frame elements (100, 120, 130, 140), wherein the frame elements (100, 120, 130, 140) respectively have an outer frame provided with passages (102, 104), a central internal region (106) bound by an outer frame and a sediment collection region (108) arranged beneath the central internal region (106),
the crystallization apparatus (10) has at least two different types of frame elements (100, 120, 130, 140) that are alternatingly combined to form a stack, wherein the central internal region (106) of the one type of frame elements (100, 130) forms a part of the at least one flow passage (16) conducting the solution (12) to be concentrated and the central internal region (106) of the other type of frame element (120, 140) forms a part of the at least one flow passage (18) conducting the liquid (14),
a respective membrane wall (20) is arranged at both sides of the central internal region (106) of one type of frame elements (120, 130), in particular is welded thereto, the membrane wall being permeable for the vaporous solvent but not for the liquid solvent,
a vapor-tight and liquid-tight film (142) is respectively arranged at both sides of the central internal region (106) of the other type of frame elements (140), in particular is welded thereto, and
an intermediate space between respectively one membrane wall (20) and an adjacent film (142) forms a part of the flow passage (44) provided for the conducting away of the solvent which has passed through the membrane wall (20).

## Revendications

1. Un système pour la cristallisation d'un matériau dissous et devant être cristallisé dans un solvant, ayant un appareil de cristallisation (10) dans lequel circule une solution (12) à concentrer, qui comporte le solvant avec le matériau dissous et devant y être cristallisé, et par un liquide (14) ayant une température inférieure à celle de la solution (12) à concentrer, dans lequel l'appareil de cristallisation (10) comporte au moins un canal d'écoulement (16) pour l'écoulement de la solution (12) à concentrer et au moins un canal d'écoulement (18) pour l'écoulement du liquide (14), dans lequel l'espace interne d'un canal d'écoulement respectif (16) écoulant la solution (12) à concentrer est au moins partiellement délimité par une paroi de membrane (20) perméable à la vapeur de solvant mais non au solvant liquide et un canal d'écoulement respectif (18) pour l'écoulement du liquide (14) est adjacent à au moins un canal d'écoulement respectif (16) pour l'écoulement de la solution (12) à concentrer, par lequel une différence de pression de vapeur est fixée par la paroi de la membrane (20) de telle manière que le solvant passe de la solution (12) à concentrer au travers la paroi de la membrane (20),
**caractérisé en ce que**
l'appareil de cristallisation (10) comprend une pluralité d'éléments cadre (100, 120, 130, 140) pouvant être combinés les uns aux autres pour la formation de différentes unités fonctionnelles, telles notamment celles dont le ou les canaux d'écoulement (16) de la solution (12) à concentrer et le ou les canaux d'écoulement (18) du liquide (14), forment un empilement comprenant au moins deux, et notamment au moins dix éléments cadres (100, 120, 130, 140), dans lequel les éléments cadres (100, 120, 130, 140) présentent un cadre extérieur fourni avec des canaux (102, 104), une région interne centrale (106) délimitée par un cadre externe et une région de collecte de sédimentation (108) disposée sous la région interne centrale (106),
l'appareil de cristallisation (10) ayant au moins deux types différents d'éléments cadre (100, 120, 130, 140) qui sont combinés en alternance pour constituer un empilement, dans lequel la région interne centrale (106) de l'un des types d'élément cadres (100, 130) forme une partie du ou des canaux d'écoulement de la solution (12) à concentrer et la région interne centrale (106) de l'autre type d'élément cadre (120, 140) forme une partie du ou des canaux d'écoulement du liquide (14),
une paroi de membrane respective (20) est disposée des deux côtés d'une région interne centrale (106) de l'une des types d'éléments cadres (120, 130), y est en particulier soudée, la paroi de membrane étant perméable à la vapeur de solvant mais non au solvant liquide,
un film étanche à la vapeur et au liquide (142) est respectivement disposé des deux côtés de la région interne centrale (106) de l'autre type d'éléments cadres (140), en particulier y est soudé, et
un espace intermédiaire entre respectivement une paroi de membrane (20) et un film adjacent (142) forme une partie du canal d'écoulement (44) fourni pour l'écoulement de sortie du solvant qui a traversé la paroi de membrane (20).

2. Le système selon l'une quelconque des revendications précédentes, **caractérisé en ce que** le liquide (14) s'écoule au travers de l'appareil de cristallisation (10) en sens contraire de l'écoulement de la solution (12) à concentrer.

3. Le système selon l'une quelconque des revendications précédentes, **caractérisé en ce que** l'appareil de cristallisation (10) comporte une pluralité d'étages (36, 38, 40) commutés l'un après l'autre, dans lequel chaque étage (36, 38, 40) comporte une pluralité de canaux d'écoulement (16) pour l'écoulement de la solution (12) à concentrer, qui sont disposés en parallèle les uns aux autres, et dans lequel au moins deux étages (36, 38, 40) comportent un nombre distinct de canaux d'écoulement (16) pour l'écoulement de la solution (12) à concentrer.

4. Le système selon l'une quelconque des revendications précédentes, **caractérisé en ce que** le système comporte un échangeur de chaleur (56) qui refroidit un liquie (14) s'écoulant hors de l'appareil de cristallisation (10) et qui chauffe la solution (12) à concentrer avec l'énergie obtenue.

5. Le système selon l'une quelconque des revendications précédentes, **caractérisé en ce que** le système comporte un élément de refroidissement (76) et un élément chauffant (74) et les deux canaux d'écoulement, dont le canal d'écoulement (16) au moins pour l'écoulement de la solution (12) à concentrer et le canal d'écoulement (18) au moins pour l'écoulement du liquide (14), permettent l'écoulement de la solution (12) à concentrer, dans lequel l'élément de refroidissement (76) et une entrée du canal d'écoulement au moins (18) du liquide (14) sont connectées en aval et dans lequel l'élément de chauffage (74) et une entrée du canal d'écoulement (16) au moins pour la solution (12) à concentrer sont connectées en aval d'une sortie d'au moins un canal d'écoulement (18) pour l'écoulement du liquide (14).

6. Une méthode de cristallisation d'un matériau dissous et devant être cristallisé dans un solvant, dans lequel une solution (12) à concentrer, qui comporte le solvant avec le matériau dissous et devant y être cristallisé, est écoulé au travers au moins un canal d'écoulement (16) et un liquide (14) ayant une température inférieure à celle de la solution (12) à concentrer, est écoulé au travers au moins un autre canal d'écoulement (18), dans lequel un appareil de cristallisation (10) comporte le canal d'écoulement au moins (16) pour l'écoulement de la solution (12) à concentrer et comporte le canal d'écoulement au moins (18) pour l'écoulement du liquide (14), dans lequel l'espace interne d'un canal d'écoulement respectif (16) écoulant la solution (12) à concentrer est au moins partiellement délimité par une paroi de membrane (20) perméable à la vapeur de solvant mais non au solvant liquide et dans lequel un canal d'écoulement respectif (18) pour l'écoulement du liquide (14) est adjacent à au moins un canal d'écoulement respectif (16) pour l'écoulement de la solution (12) à concentrer, par lequel une différence de pression de vapeur est fixée par la paroi de la membrane (20) de telle manière que le solvant passe de la solution (12) à concentrer au travers la paroi de la membrane (20),
**caractérisé en ce que**
l'appareil de cristallisation (10) comprend une pluralité d'éléments cadres (100, 120, 130, 140) pouvant être combinés les uns aux autres pour la formation de différentes unités fonctionnelles, telles notamment celles dont le ou les canaux d'écoulement (16) de la solution (12) à concentrer et le ou les canaux d'écoulement (18) du liquide (14), forment un empilement comprenant au moins deux, et notamment au moins dix éléments cadres (100, 120, 130, 140), dans lequel les éléments cadres (100, 120, 130, 140) présentent un cadre extérieur fourni avec des canaux (102, 104), une région interne centrale (106) délimitée par un cadre externe et une région de collecte de sédimentation (108) disposée sous la région interne centrale (106),
l'appareil de cristallisation (10) ayant au moins deux types différents d'éléments cadre (100, 120, 130, 140) qui sont combinés en alternance pour constituer un empilement, dans lequel la région interne centrale (106) de l'un des types d'élément cadres (100, 130) forme une partie du ou des canaux d'écoulement de la solution (12) à concentrer et la région interne centrale (106) de l'autre type d'élément cadre (120, 140) forme une partie du ou des canaux d'écoulement du liquide (14),
une paroi de membrane respective (20) est disposée des deux côtés d'une région interne centrale (106) de l'une des types d'éléments cadres (120, 130), y est en particulier soudée, la paroi de membrane étant perméable à la vapeur de solvant mais non au solvant liquide,
un film étanche à la vapeur et au liquide (142) est respectivement disposé des deux côtés de la région interne centrale (106) de l'autre type d'éléments cadres (140), en particulier y est soudé, et
un espace intermédiaire entre respectivement une paroi de membrane (20) et un film adjacent (142) forme une partie du canal d'écoulement (44) fourni pour l'écoulement de sortie du solvant qui a traversé la paroi de membrane (20).
